(19) Europäisches Patentamt
European Patent Office
Office européen des brevets

(11) EP 3 141 574 B1

(12) **EUROPEAN PATENT SPECIFICATION**

(45) Date of publication and mention of the grant of the patent:
**10.07.2019 Bulletin 2019/28**

(21) Application number: **14891536.6**

(22) Date of filing: **07.05.2014**

(51) Int Cl.:
*C08G 81/00* (2006.01) *C09D 11/102* (2014.01)
*C09D 169/00* (2006.01) *C09D 171/00* (2006.01)
*C09J 169/00* (2006.01) *C09J 171/02* (2006.01)
*C08G 81/02* (2006.01) *C08G 64/42* (2006.01)
*C08L 69/00* (2006.01) *C08G 64/02* (2006.01)
*C08G 64/18* (2006.01) *C08G 64/20* (2006.01)

(86) International application number:
**PCT/JP2014/062270**

(87) International publication number:
**WO 2015/170374 (12.11.2015 Gazette 2015/45)**

(54) **POLYCARBONATE/POLYOXY ETHYLENE BLOCK COPOLYMER FOR AQUEOUS COMPOSITIONS, AND AQUEOUS COMPOSITION, AQUEOUS COATING COMPOSITION, AQUEOUS INK COMPOSITION, AND AQUEOUS TACKIFIER COMPOSITION COMPRISING THE SAME**

POLYCARBONAT/POLYOXYETHYLEN-BLOCKCOPOLYMER FÜR WÄSSRIGE ZUSAMMENSETZUNGEN UND WÄSSRIGE ZUSAMMENSETZUNGEN, WÄSSRIGE BESCHICHTUNGSZUSAMMENSETZUNG, WÄSSRIGE TINTENZUSAMMENSETZUNG UND WÄSSRIGE KLEBRIGMACHENDE ZUSAMMENSETZUNG DIESES ENTHALTEND

COPOLYMÈRE SÉQUENCÉ DE POLYCARBONATE/POLYOXYÉTHYLÈNE POUR COMPOSITIONS AQUEUSES ET COMPOSITION AQUEUSE, COMPOSITION DE REVÊTEMENT AQUEUSE, COMPOSITION D'ENCRE AQUEUSE ET COMPOSITION D'AGENT TACKIFIANT AQUEUX CONTENANT LE COPOLYMÈRE SÉQUENCÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**15.03.2017 Bulletin 2017/11**

(73) Proprietor: **ASAHI KASEI KABUSHIKI KAISHA**
**Tokyo 100-0006 (JP)**

(72) Inventor: **MIYAZAKI, Takayuki**
**Tokyo 101-8101 (JP)**

(74) Representative: **Strehl Schübel-Hopf & Partner**
**Maximilianstrasse 54**
**80538 München (DE)**

(56) References cited:
**WO-A1-2010/062703** **WO-A1-2012/069523**
**JP-A- H02 219 821** **JP-A- H03 252 420**
**JP-A- H04 268 326** **JP-A- H04 309 526**
**JP-A- 2002 179 787** **JP-A- 2006 124 485**
**JP-A- 2006 124 485** **JP-A- 2006 124 486**
**US-A- 5 260 129**

- **Jeannette Hilf ET AL: "CO 2 -Based Non-ionic Surfactants: Solvent-Free Synthesis of Poly(ethylene glycol)- block -Poly(propylene carbonate) Block Copolymers", Macromolecular Chemistry and Physics, 25 October 2013 (2013-10-25), pages n/a-n/a, XP055085497, ISSN: 1022-1352, DOI: 10.1002/macp.201300586**

Remarks:
The file contains technical information submitted after the application was filed and not included in this specification

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 141 574 B1

## Description

### Technical Field

The present invention relates to a polycarbonate/polyoxyethylene block copolymer for an aqueous composition, and an aqueous composition, an aqueous coating composition, an aqueous ink composition and an aqueous tackifier composition comprising the same.

### Background Art

A polycarbonate diol can be synthesized from, for example, an alkylenediol compound such as 1,6-hexanediol and a carbonate compound such as dimethyl carbonate, diethyl carbonate and ethylene carbonate. A polycarbonate diol is generally used as a polyol that is one of raw materials of a polyurethane product.

While a polyester polyol or a polyether polyol is generally used as the polyol that is one raw material of a polyurethane product, a polycarbonate diol has an advantage over such polyols in that hydrolysis resistance, heat resistance, weather resistance, chemical resistance, abrasion resistance and the like of a polyurethane product to be obtained are good.

When a polycarbonate diol is further blended in a coating, a coating agent or the like to which a compound having reactivity with a hydroxyl group such as a melamine resin, an isocyanate compound or a block isocyanate compound is blended, a polycarbonate diol is expected to improve elasticity, adhesiveness to various substrates, scratch resistance and chipping resistance, and to impart smooth and flexible texture (so-called soft feel properties).

Patent Literature 1 discloses a block copolymer diol having a polycarbonate sequence and an ethylene oxide structural unit in one molecule. Patent Literature 2 discloses a polyether carbonate diol obtained by a reaction of an alkylenediol, a polyether diol including ethylene oxide and/or propylene oxide structural unit(s), and a carbonate compound. Patent Literature 3 discloses a polycarbonate diol obtained by a transesterification reaction of a polycarbonate diol and a polyethylene glycol. Patent Literature 4 discloses a polycarbonate polyol for a coating, obtained by a transesterification reaction of a polycarbonate polyol and a polyethylene glycol monoalkyl ether. Patent Literature 5 discloses a polycarbonate diol which is terminated entirely with hydroxyl groups. The polycarbonate diol is produced by transesterifying an alkylene carbonate like ethylene carbonate with a diol. Patent Literature 6 discloses an aliphatic-aromatic polyether block copolycarbonates containing aromatic carbonate structural units and aliphatic polyether carbonate structural units. Patent Literature 7 discloses a coating composition comprising a crosslinker; and a poly(propylene carbonate) polyol, wherein the poly(propylene carbonate) polyol comprises at least 95%-OH end groups. Patent Literature 8 discloses a polycarbonate / polyether block copolymer of number average molecular weight 300-50000 which has a hydroxyl group at the terminal, which can be used in water-based polyurethane coating composition.

### Citation List

#### Patent Literatures

Patent Literature 1: Japanese Patent Publication No. 63-064553
Patent Literature 2: Japanese Patent Laid-Open No. 2005-232447
Patent Literature 3: Japanese Patent Laid-Open No. 03-252420
Patent Literature 4: Japanese Patent Laid-Open No. 2002-179787
Patent Literature 5: JP H02 219821 A
Patent Literature 6: US 5 260 129 A
Patent Literature 7: WO 2012/069523 A1
Patent Literature 8: JP 2006124485

### Summary of Invention

#### Technical Problem

The techniques described above, however, still have room for improvement. For example, while an organic solvent-based formulation has been progressively shifted to an aqueous formulation in various applications in terms of protection of the global environment and industrial health and safety in recent years, all the above polycarbonate diols and derivatives thereof have been developed without any supposition of use in an aqueous formulation. Accordingly,

there are rooms for improvements in water dilutability, stability of a blended material used in an aqueous formulation, and the like, but no sufficient studies about such improvements have been made in practice.

The present invention has been made in view of the above circumstances, and an object thereof is to provide a polycarbonate/polyoxyethylene block copolymer for an aqueous composition, which is excellent in water dilutability and which can be used in an aqueous composition.

Solution to Problem

The present inventor has made intensive studies in order to solve the above problem, and as a result, has obtained the following finding: a polycarbonate/polyoxyethylene block copolymer comprising a specified polycarbonate diol structure and a specified polyoxyethylene structure, in which each of both terminals is substantially a hydroxyl group, is excellent in water dilutability and is suitably used as an aqueous composition, leading to completion of the present invention.

That is, the present invention is as follows.

[1] An aqueous coating composition comprising:

(i) a polycarbonate/polyoxyethylene block copolymer comprising a polycarbonate structure represented by the following general formula (1) and a polyoxyethylene structure represented by the following general formula (2), wherein the proportion of the hydroxyl groups in the total amount of both terminal groups of the copolymer, measured according to the method disclosed below, is 90% by mole or more:

$$-(R\text{-}O\text{-}CO\text{-}O)_m- \qquad (1)$$

wherein R may be the same or different and represents a divalent aliphatic hydrocarbon group having 3 to 9 carbon atoms and optionally having a branched chain, or a divalent alicyclic hydrocarbon group having 6 to 8 carbon atoms, and m represents a number of to 50, and

$$-(CH_2\text{-}CH_2\text{-}O)_n- \qquad (2)$$

wherein n represents a number of 13 to 46,
and
(ii) a polycarbonate diol represented by general formula (3):

$$HO\text{-}(R\text{-}O\text{-}CO\text{-}O)_p\text{-}R\text{-}OH$$

wherein R may be the same or different and represents a divalent aliphatic hydrocarbon group having 3 to 9 carbon atoms and optionally having a branched chain, or a divalent alycyclic hydrocarbon group having 6 to 8 carbon atoms, and p represents a number of 2 to 50;
wherein the mass ratio of the total amount of the polycarbonate structure represented by the general formula (1) and the polycarbonate structure represented by -(R-O-CO-O) - in the general formula (3) to the polyoxyethylene structure represented by the general formula (2) (polycarbonate structure/ polyoxyethylene structure), measured according to the method disclosed below is 50/50 to 95/5;
and wherein R in the general formula (3) has the same meaning as R in the general formula (1), p in the general formula (3) has the same meaning as m in the general formula (1).

[2] The aqueous composition according to [1], wherein R represents both of a pentylene group and a hexylene group.
[3] The aqueous composition according to [1] or [2], wherein a proportion of a total amount of a structure, in which R in the general formula (1) represents a pentylene group or a hexylene group, and a component, in which R in the general formula (3) represents a pentylene group or a hexylene group, calculated by the following formula (i), is 50% by mole or more:

Proportion (% by mole) = {(Molar amount of structure in which R in general formula (1) represents pentylene group or hexylene group) + (Molar amount of component in which R in general formula (3) represents pentylene group or hexylene group)}/{(Total molar amount of structure represented by general formula (1)) + (Total molar amount of component represented by general formula (3))} × 100 (i).

[4] A method of producing the aqueous composition according to [1] or [2], comprising obtaining a transesterification reaction product of a polycarbonate diol represented by the following general formula (3) as a raw material and a polyethylene glycol represented by the following general formula (4) as a raw material:

$$HO\text{-}(R\text{-}O\text{-}CO\text{-}O)_p\text{-}R\text{-}OH \qquad (3)$$

wherein R may be the same or different and represents a divalent aliphatic hydrocarbon group having 3 to 9 carbon atoms and optionally having a branched chain, or a divalent alicyclic hydrocarbon group having 6 to 8 carbon atoms and p represents a number of 2 to 50; and

$$HO\text{-}(CH_2\text{-}CH_2\text{-}O)_q\text{-}H \qquad (4)$$

wherein q represents a number of 13 to 46.

[5] The method according to [4], wherein R in the polycarbonate diol represented by the general formula (3) as a raw material represents at least a pentylene group and a hexylene group.

[6] The method according to [5], wherein a proportion of a polycarbonate diol, in which R in the polycarbonate diol represented by the general formula (3) as the raw material represents a pentylene group or a hexylene group, is 50% by mole or more.

[7] Use of the aqueous composition according to any one of [1] to [3], as an aqueous ink composition.

[8] Use of the aqueous composition according to any one of [1] to [3], as an aqueous viscous adhesive.

[9] Use of a polycarbonate/polyoxyethylene block copolymer, comprising a polycarbonate structure represented by the following general formula (1) and a polyoxyethylene structure represented by the following general formula (2), wherein the proportion of the hydroxyl groups in the total amount of both terminal groups of the copolymer, measured according to the method disclosed below, is 90% by mole or more:

$$\text{-}(R\text{-}O\text{-}CO\text{-}O)_m\text{-} \qquad (1)$$

wherein R may be the same or different and represents a divalent aliphatic hydrocarbon group having 3 to 9 carbon atoms and optionally having a branched chain, a divalent alicyclic hydrocarbon group having 6 to 8 carbon atoms, and m represents a number of 2 to 50; and

$$\text{-}(CH_2\text{-}CH_2\text{-}O)_n\text{-} \qquad (2)$$

wherein n represents a number of 13 to 46,
in an aqueous composition for coating according to any one of claims 1 to 3.

Advantageous Effect of Invention

The present invention can provide a polycarbonate/polyoxyethylene block copolymer for an aqueous composition, which is excellent in water dilutability and which can be used in an aqueous composition.

Description of Embodiments

Hereinafter, an embodiment for carrying out the present invention (hereinafter, simply referred to as "present

embodiment".) is described in detail. The present invention is not limited to the following embodiment, and can be variously modified and carried out within the scope thereof.

A polycarbonate/polyoxyethylene block copolymer (hereinafter, sometimes simply referred to as "block copolymer".) for an aqueous composition is a polycarbonate/polyoxyethylene block copolymer for an aqueous composition, comprising a polycarbonate structure represented by the following general formula (1) and a polyoxyethylene structure represented by the following general formula (2), wherein the proportion of the hydroxyl groups in the total amount of both terminal groups of the copolymer, measured according to the method disclosed below, is 90% by mole or more:

$$-(R\text{-}O\text{-}CO\text{-}O)_m- \qquad (1)$$

wherein R may be the same or different and represents a divalent aliphatic hydrocarbon group having 3 to 9 carbon atoms and optionally having a branched chain, or a divalent alicyclic hydrocarbon group having 6 to 8 carbon atoms, and m represents a number of 2 to 5; and

$$-(CH_2\text{-}CH_2\text{-}O)_n- \qquad (2)$$

wherein n represents a number of 13 to 46.

The aqueous composition of the present invention is an aqueous composition including the block copolymer, and a polycarbonate diol represented by the following general formula (3):

$$HO\text{-}(R\text{-}O\text{-}CO\text{-}O)_p\text{-}R\text{-}OH \qquad (3)$$

wherein R may be the same or different and represents a divalent aliphatic hydrocarbon group having 3 to 9 carbon atoms and optionally having a branched chain, or a divalent alicyclic hydrocarbon group having 6 to 8 carbon atoms, and p represents a number of 2 to 50;

wherein the mass ratio of the total amount of the polycarbonate structure represented by the general formula (1) and the polycarbonate structure represented by $-(R\text{-}O\text{-}CO\text{-}O)_p-$ in the general formula (3) to the polyoxyethylene structure represented by the general formula (2) (polycarbonate structure/ polyoxyethylene structure) is 50/50 to 95/5.

Hereinafter, respective components in the block copolymer and the aqueous composition including the block copolymer are described in detail.

In the block copolymer, (i) the terminal structure of the polyoxyethylene structure represented by the general formula (2) is a terminal structure where one terminal is bound to a carbonate group and the other terminal is bound to a hydroxyl group and/or a terminal structure where each of both terminals is bound to a carbonate group, and (ii) wherein the proportion of the hydroxyl groups in the total amount of both terminal groups of the copolymer, measured according to the method disclosed below, is 90% by mole or more.

The block copolymer can be diluted with water. If the block copolymer is diluted with water, it can be dissolved or dispersed therein. When the block copolymer is then diluted with water, it can be suppressed or reduced in separation and precipitation. The block copolymer is sufficiently stable in practical use conditions.

In the block copolymer, the proportion of the hydroxyl groups in the total amount of both terminal groups of the copolymer, measured according to the method disclosed below, is 90% by mole or more. Each of the terminals, however, may not be sometimes partially a hydroxyl group due to the terminal structures of impurities included in each raw material for use in production of the polycarbonate diol represented by the general formula (3), and a by-product secondarily produced in production of the block copolymer. Furthermore, in order to control reactivity and the reaction state with a crosslinking agent and the like to be used depending on the application of the block copolymer, the hydroxyl group at each of the terminals of the block copolymer may also be partially intentionally converted to an alkyl group, an aryl group and the like that are low in reactivity with the crosslinking agent and the like.

In the present invention the proportion of the hydroxyl group in the total amount of both terminal groups of the block copolymer is 90% by mole or more, more preferably 95% by mole or more. The proportion of the hydroxyl group in the total amount of both terminal groups of the block copolymer is calculated according to the following method.

The block copolymer is heated under reduced pressure to thereby provide a fraction in an amount of about 1 to 2% by mass relative to the block copolymer, and the fraction is recovered by use of alcohols such as ethanol as a solvent, and used as a measurement solution. The measurement solution can be subjected to gas chromatography (GC) analysis, to allow the proportion of the hydroxyl group to be calculated from the peak area value of the resulting chromatogram. For example, the proportion can be calculated based on the following formula.

Proportion of hydroxyl group in total amount of terminal groups (% by mole) = (Total peak area of diol in which each of both terminals is hydroxyl group)/(Total peak area of alcohols including diol (excluding ethanol)) × 100

For example, in order that the composition obtained by a transesterification reaction of a polycarbonate polyol and a polyethylene glycol monoalkyl ether, described in Japanese Patent Laid-Open No. 2002-179787, achieves sufficient water dilutability, for example, an increase in proportion of the polyethylene glycol monoalkyl ether is considered to be necessary. In such a case, however, the proportion of the alkyl ether is increased to thereby reduce the proportion of the hydroxyl group at each molecular terminal of a block copolymer to be obtained. Therefore, the present inventor has focused on the following: when such a composition is aimed to react with a crosslinking agent and the like, no performances may be sufficiently exhibited.

In the case of a low proportion of the hydroxyl group at each molecular terminal, the resultant is not sufficient in reactivity (crosslinkability and the like) with a compound having reactivity with a hydroxyl group (for example, a melamine resin, an isocyanate compound or a block isocyanate compound) and therefore may not exhibit physical properties expected, even if such a compound is blended therewith. The block copolymer, however, has both terminals each being substantially a hydroxyl group, and therefore can exhibit excellent physical properties without any reduction in reactivity (crosslinkability and the like), even if being allowed to react with a compound having reactivity with a hydroxyl group.

R in the general formula (1) represents a divalent aliphatic hydrocarbon group having 2 to 15 carbon atoms and optionally having a branched chain, a divalent alicyclic hydrocarbon group or a divalent aromatic hydrocarbon group.

The number of carbon atoms in the divalent aliphatic hydrocarbon group is preferably 3 to 12, more preferably 3 to 9. Examples of the divalent aliphatic hydrocarbon group having 2 to 15 carbon atoms and optionally having a branched chain include a straight or branched alkylene group having 2 to 15 carbon atoms. Specific examples of the straight or branched alkylene group having 2 to 15 carbon atoms include an ethylene group, a propylene group, an isopropylene group, a butylene group, an isobutylene group, a tert-butylene group, a pentylene group, an isopentylene group, a hexylene group, an isohexylene group, a heptylene group, an isoheptylene group, an octylene group and an isooctylene group. Among them, a butylene group, a pentylene group, an isopentylene group, a hexylene group, an isohexylene group and the like are preferable in terms of general-purpose properties.

The number of carbon atoms in the divalent alicyclic hydrocarbon group is preferably 6 to 15, more preferably 6 to 8. Specific examples of the divalent alicyclic hydrocarbon group include a cyclobutylene group, a cyclopentylene group, a cyclohexylene group and a cycloheptylene group. Among them, a cyclohexylene group and the like are preferable in terms of general-purpose properties.

Examples of the divalent aromatic hydrocarbon group include a divalent substituent represented by the following general formula (a).

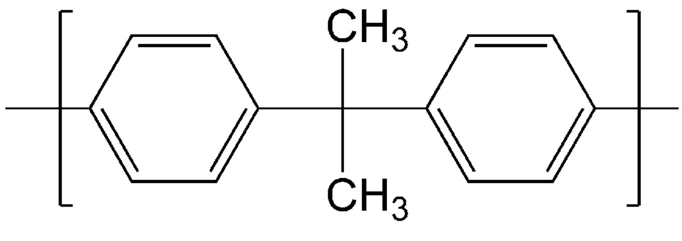

(a)

R in the general formula (1) may be the same or different. The above specific examples may be used singly or in combination of two or more. The combination of two or more is, for example, preferably each combination of a pentylene group and a hexylene group, a butylene group and a hexylene group, a 2-methylpropylene group and a butylene group, and a butylene group, a pentylene group and a hexylene group. Furthermore, a combination of a pentylene group and a hexylene group is more preferable.

Among them, R more preferably represents a pentylene group or a hexylene group, more preferably both of a pentylene group and a hexylene group because the block copolymer is easily in the form of a liquid at normal temperature, is easily low in viscosity and is further enhanced in water dilutability, for example.

According to the present invention R may be the same or different and represents a divalent aliphatic hydrocarbon group having 3 to 9 carbon atoms and optionally having a branched chain, or a divalent alicyclic hydrocarbon group having 6 to 8 carbon atoms.

In the aqueous composition of particular embodiment, the proportion of the total amount of a structure in which R in the general formula (1) represents a pentylene group or a hexylene group and a component in which R in the general formula (3) represents a pentylene group or a hexylene group, calculated by the following formula (i), is preferably 50% by mole or more, more preferably 80% by mole or more, further preferably 90% by mole or more from the viewpoint that the block copolymer tends to be a liquid and exhibits water dilutability.

Proportion (% by mole) = {(Molar amount of structure in which R in general formula (1) represents pentylene group or hexylene group) + (Molar amount of component in which R in general formula (3) represents pentylene group or hexylene group)}/{(Total molar amount of structure represented by general formula (1)) + (Total molar amount of component represented by general formula (3))} × 100 (i)

Conventionally, few developments of a polycarbonate diol type composition have focused on improvements in water dilutability and the like. The present inventor, however, has made intensive studies by a large change in thinking in order to realize a polycarbonate diol type composition excellent in water dilutability, and as a result, has obtained the following finding: a block copolymer is used in which a polyoxyethylene block having a specified structure is introduced to a polycarbonate having a specified structure. The present inventor further has made intensive studies based on such a finding, and as a result has found that a polycarbonate structure having both of a pentylene group and a hexylene group in combination, which has not been conventionally used, is introduced to a block copolymer to result in further enhancements in water dilutability as a block copolymer and also further enhancements in physical properties as an aqueous composition.

In the general formula (1), m represents a number, and m is preferably 2 to 50, more preferably 3 to 30, further preferably 4 to 20.

In the general formula (2), n represents a number, and n is preferably 9 to 46, more preferably 13 to 35. The value of n can be analyzed by subjecting the block copolymer to alkalinolysis to extract a diol component, and subjecting the diol component to GC-MS measurement, LC-MS measurement, and GPC measurement.

The terminal structure of the polyoxyethylene structure represented by the general formula (2) is (i) a terminal structure where one terminal is bound to a carbonate group and the other terminal is bound to a hydroxyl group, and/or (ii) a terminal structure where each of both terminals is bound to a carbonate group. That is, in a polycarbonate diol composition, the terminal of the polyoxyethylene structure is at least any of the above terminal structures.

The mass ratio of the polycarbonate structure to the polyoxyethylene structure in the block copolymer (polycarbonate structure/polyoxyethylene structure) is preferably 50/50 to 95/5, more preferably 70/30 to 92/8, further preferably 80/20 to 90/10. Furthermore, in the aqueous composition of the present invention, the mass ratio of the total amount of the polycarbonate structure represented by the general formula (1) and the polycarbonate structure represented by $-(R\text{-}O\text{-}CO\text{-}O)_p-$ in the general formula (3) relative to the polyoxyethylene structure represented by the general formula (2) (polycarbonate structure/polyoxyethylene structure) is 50/50 to 95/5, more preferably 70/30 to 92/8, further preferably 80/20 to 90/10. When the mass ratio of the polycarbonate structure to the polyoxyethylene structure is the above lower limit or more, water resistance and heat resistance required in various applications are further enhanced, and general-purpose properties are further enhanced. When the mass ratio of the polycarbonate structure to the polyoxyethylene structure is the above upper limit or less, water dilutability is further enhanced.

The number average molecular weight of the block copolymer is preferably 300 to 10000. When the number average molecular weight is 300 or more, performances expected for the block copolymer are still further exhibited. When the number average molecular weight is 10000 or less, an increase in viscosity can be effectively suppressed to thereby result in a further enhancement in handleability and also a further enhancement in water dilutability. The number average molecular weight of the block copolymer is more preferably 500 to 5000, still more preferably 800 to 3000 in terms of water dilutability.

Furthermore, the number average molecular weight of each of the block copolymer and the polycarbonate diol in the aqueous composition is preferably 300 to 10000. When the number average molecular weight is 300 or more,

performances expected for the aqueous composition are still further exhibited. When the number average molecular weight is 10000 or less, an increase in viscosity can be effectively suppressed to thereby result in a further enhancement in handleability and also a further enhancement in water dilutability. The number average molecular weight of the aqueous composition is more preferably 500 to 5000, still more preferably 800 to 3000 in terms of water dilutability. The number average molecular weight can be determined according to a method described in Examples.

Examples of the method of controlling the number average molecular weight of each of the block copolymer and the polycarbonate diol include (a) a method in which a polycarbonate diol and a polyethylene glycol each having a proper molecular weight are used as raw materials, and (b) a method in which a transesterification reaction is performed by addition of at least one diol compound (raw material of polycarbonate diol, such as 1,5-pentanediol and 1,6-hexanediol, described later) for use in production of a polycarbonate diol, in an amount to be required as a molecular weight modifier. For example, when the method (b) is used, such a diol compound can be used as a molecular weight modifier in the transesterification reaction to thereby provide a block copolymer or an aqueous composition having a desired number average molecular weight, even in use of a high-molecular weight polycarbonate diol as a raw material. Such procedures exemplified here are examples, and the control method is not limited thereto.

The hydroxyl value of the block copolymer is preferably 10 to 370 mgKOH, more preferably 20 to 200 mgKOH, further preferably 40 to 140 mgKOH in terms of blending properties with other component, and molecular weight control. The hydroxyl value can be determined according to a method described in Examples.

Furthermore, the total amount of the hydroxyl values of the block copolymer and the polycarbonate diol in the aqueous composition is preferably 10 to 370 mgKOH, more preferably 20 to 200 mgKOH, further preferably 40 to 140 mgKOH in terms of blending properties with other component, and molecular weight control. The hydroxyl value can be determined according to a method described in Examples.

<Production methods of polycarbonate/polyoxyethylene block copolymer, aqueous composition>

The method of producing the aqueous composition of the present invention comprises a transesterification reaction of a polycarbonate diol represented by the following general formula (3) and a polyethylene glycol represented by the following general formula (4). The transesterification reaction can be controlled as a so-called disproportional reaction. Such a method can provide not only the block copolymer, but also the aqueous composition also containing the polycarbonate diol represented by the general formula (3). That is, the aqueous composition of the present invention is obtained by a transesterification reaction of the polycarbonate diol represented by the general formula (3) as a raw material and the polyethylene glycol represented by the general formula (4) as a raw material:

$$HO\text{-}(R\text{-}O\text{-}CO\text{-}O)_p\text{-}R\text{-}OH \qquad (3)$$

wherein R may be the same or different and represents a divalent aliphatic hydrocarbon group having 3 to 9 carbon atoms and optionally having a branched chain, or a divalent alicyclic hydrocarbon group having 6 to 8 carbon atoms, and p represents anumber of 2 to 50; and

$$HO\text{-}(CH_2\text{-}CH_2\text{-}O)_q\text{-}H \qquad (4)$$

wherein q represents a number of 13 to 46.

In the transesterification reaction of the polycarbonate diol represented by the general formula (3) and the polyethylene glycol represented by the general formula (4), the polycarbonate diol represented by the general formula (3) may be excessively used or may be excessively present in the reaction system. In such a case, the polycarbonate diol represented by the general formula (3) may remain within a range in which the effect of the present invention is achieved. When the aqueous composition containing the block copolymer and the polycarbonate diol represented by the general formula (3) is aimed to be obtained, as described above, the amount of the polycarbonate diol represented by the general formula (3) as a raw material, to be used, can also be increased. The content of the polycarbonate diol in the resulting aqueous composition tends to be increased by an increase in the amount of the polycarbonate diol represented by the general formula (3) as a raw material of the transesterification reaction, to be used. From such a viewpoint, the mass ratio of the polycarbonate diol represented by the general formula (3) as a raw material to the polyethylene glycol represented by the general formula (4) as a raw material (polycarbonate diol/polyethylene glycol) is preferably 50/50 to 95/5.

When the aqueous composition is obtained in this way, the content of the polycarbonate diol in the aqueous composition is preferably 0 to 90% by mass. The lower limit of the content of the polycarbonate diol is more preferably more than 0% by mass, further preferably 40% by mass or more, further preferably 60% by mass or more. The upper limit of the content of the polycarbonate diol is more preferably 85% by mass or less, further preferably 80% by mass or less, further preferably 75% by mass or less.

On the other hand, the polyethylene glycol represented by the general formula (4) preferably does not remain in the aqueous composition wherever possible, in terms of water resistance. Accordingly, the aqueous composition preferably does not contain substantially the polyethylene glycol represented by the general formula (4).

R in the general formula (3) has the same meaning as R in the general formula (1), p in the general formula (3) has the same meaning as m in the general formula (1), and q in the general formula (4) has the same meaning as n in the general formula (2). Hereinafter, the polycarbonate diol represented by the general formula (3), the polyethylene glycol represented by the general formula (4), are described.

In the polycarbonate diol represented by the general formula (3) as a raw material, R in the general formula (3) preferably represents a pentylene group or a hexylene group, more preferably both of a pentylene group and a hexylene group. Furthermore, in the polycarbonate diol represented by the general formula (3) as a raw material, the proportion of a polycarbonate diol in which R represents a pentylene group or a hexylene group is preferably 50% by mole or more.

The polycarbonate diol as a raw material is not particularly limited as long as it has the structure represented by the general formula (3). The method of producing the polycarbonate diol is not particularly limited, and a known method can also be adopted therefor. Examples of the method of producing the polycarbonate diol include a method in which a diol and an alkylene carbonate are subjected to polycondensation by a transesterification reaction; and a method in which a diol, and a dialkyl carbonate and/or a diaryl carbonate are subjected to polycondensation by a transesterification reaction.

Examples of the diol include, without any particular limitation, straight diols such as ethylene glycol, 1,3-propanediol, 1,4-butanediol, 1,5-pentanediol, 1,6-hexanediol, 1,7-heptanediol, 1,8-octanediol, 1,9-nonanediol, 1,10-decanediol, 1,11-undecanediol and 1,12-dodecanediol; branched diols such as 2-methyl-1,3-propanediol, neopentyl glycol, 3-methyl-1,5-pentanediol, 2,4-dimethyl-1,5-pentanediol, 2,4-diethyl-1,5-pentanediol, 2-ethyl-1,6-hexanediol and 2-methyl-1,8-octanediol; and cyclic diols such as 1,3-cyclohexanediol, 1,4-cyclohexanediol, 1,4-cyclohexane dimethanol, and 2-bis(4-hydroxycyclohexyl)-propane.

Examples of the alkylene carbonate include, without any particular limitation, ethylene carbonate, trimethylene carbonate, 1,2-propylene carbonate, 1,2-butylene carbonate, 1,3-butylene carbonate and 1,2-pentylene carbonate.

Examples of the dialkyl carbonate include, without any particular limitation, dimethyl carbonate, diethyl carbonate, dipropyl carbonate and dibutyl carbonate.

Examples of the diaryl carbonate include, without any particular limitation, diphenyl carbonate.

In production of the polycarbonate diol, a transesterification reaction catalyst can be used. As such a catalyst, a transesterification reaction catalyst commonly used can be used. Specific examples of the transesterification reaction catalyst include, without any particular limitation, metals such as lithium, sodium, potassium, rubidium, cesium, magnesium, calcium, strontium, barium, zinc, aluminum, titanium, cobalt, germanium, tin, lead, antimony, arsenicum and cerium; salts of such metals; alkoxides of such metals; and organic substances of such metals. Among them, titanium compounds (in particular, titanium alkoxides) such as titanium tetra-n-butoxide, titanium tetra-n-propoxide and titanium tetra-isopropoxide; and lead compounds such as tetraphenyl lead, lead acetate and lead stearate are preferable. The amount of the transesterification reaction catalyst to be used is not particularly limited, and the amount relative to the total amount of the raw materials is usually 0.00001 to 0.1% by mass.

The polycarbonate diol may include a catalyst poison such as an acidic phosphoric acid ester compound in order to deactivate the transesterification reaction catalyst used in production thereof.

The polycarbonate diol may be a so-called homogeneous carbonate diol obtained from one diol, or may be a so-called copolymerized polycarbonate diol obtained from two or more diols.

Any of the polycarbonate diols exemplified above can be used to provide a block copolymer by a transesterification reaction with a polyethylene glycol. While the resulting block copolymer is preferably a liquid at normal temperature in terms of handleability and the like, a polycarbonate diol that is a liquid at normal temperature tends to be usually preferably used in order to provide such a block copolymer. For example, a so-called C6 homogeneous polycarbonate diol in which only 1,6-hexanediol is used as a diol has general-purpose properties, but is a solid at normal temperature, and a block copolymer obtained from such a diol also tends to be a solid at normal temperature.

On the contrary, a polycarbonate diol (hereinafter, sometimes referred to as "C56 copolymerized polycarbonate diol".) obtained by using both of a diol having 5 carbon atoms (for example, 1,5-pentanediol) and a diol having 6 carbon atoms (for example, 1,6-hexanediol) is preferable because of being a liquid at normal temperature. A block copolymer obtained from such a polycarbonate diol also tends to be a liquid at normal temperature. Accordingly, a polycarbonate diol serving as a raw material is preferably one that is a liquid at normal temperature, in terms of handleability. In particular, the C56 copolymerized polycarbonate diol is particularly preferable because of having a low melting point and being widely marketed.

The number average molecular weight of the polycarbonate diol is not particularly limited, and is preferably 500 to 5000, more preferably 1000 to 3000. When the number average molecular weight of the polycarbonate diol is 500 or more, performances expected for the block copolymer tends to be further enhanced. When the number average

molecular weight of the polycarbonate diol is 5000 or less, the block copolymer of the present embodiment can be inhibited from being increased in viscosity, and tends to be further enhanced in handleability.

The polycarbonate diol may contain, if necessary, a polyester component such as polybutylene adipate, a polyether component such as polytetramethylene glycol, and the like in order that the viscosities and properties of the block copolymer and the aqueous composition are adjusted. When the polycarbonate diol contains such component(s), the content of the polycarbonate diol is preferably 50% by mass or more, more preferably 70% by mass or more.

The polyethylene glycol has the structure represented by the general formula (4). As the polyethylene glycol, products having a wide range of molecular weights are commercially available, and such a commercial product can be used. Examples of the commercial product include "Polyethylene Glycol " series produced by Wako Pure Chemical Industries, Ltd. Two or more polyethylene glycols having a different molecular weight from each other can be used in combination.

The number average molecular weight of the polyethylene glycol is not particularly limited, and is preferably 400 to 2000, more preferably 600 to 1500. When the number average molecular weight of the polyethylene glycol is 400 or more, the block copolymer diluted with water and the aqueous composition can be inhibited from being increased in dispersed particle size, and tends to be further enhanced in dispersion stability. Furthermore, when the number average molecular weight of the polyethylene glycol is 400 or more, the amount of the polyethylene glycol to be used can be reduced, and therefore water resistance and heat resistance of the aqueous composition using the block copolymer can also be expected to be further enhanced. When the number average molecular weight of the polyethylene glycol is 2000 or less, the block copolymer is decreased in crystallinity and thus is easily a liquid block copolymer at normal temperature, and the block copolymer and the aqueous composition are further enhanced in handleability.

The temperature of the transesterification reaction is not particularly limited, and is preferably 120 to 200°C, more preferably 140 to 180°C. When the reaction temperature is the above lower limit or more, the transesterification reaction can be allowed to progress in a shorter time, and an excellent production efficiency is achieved. When the reaction temperature is the above upper limit or less, coloration of the block copolymer and the aqueous composition obtained can be prevented.

The pressure of the transesterification reaction is not particularly limited, and is preferably from normal pressure to 1 MPa. The pressure is preferably in the above range from the viewpoint that the reaction can be simply performed and also from the viewpoint that, when an auxiliary material other than the polycarbonate diol and the polyethylene glycol as raw materials is also used, a certain pressure can be applied in consideration of the vapor pressure of such a material, to thereby more efficiently promote the transesterification reaction.

When the transesterification reaction catalyst is used in production of the polycarbonate diol, the catalyst poison of the catalyst may be included in the polycarbonate diol to thereby usually cause the transesterification reaction to hardly progress to the forward direction. In such a case, the transesterification reaction catalyst may also be newly added in an amount to be required.

When the polycarbonate diol does not include the catalyst poison of the transesterification reaction catalyst, the transesterification reaction usually tends to progress to the forward direction. Even in the case, the transesterification reaction catalyst may also be newly added in an amount to be required, if the reaction temperature is desirably more decreased or the reaction time is desirably more shortened.

The transesterification reaction catalyst is not limited, and a known transesterification reaction catalyst can also be used. Specific examples of the transesterification reaction catalyst include, without any particular limitation, metals such as lithium, sodium, potassium, rubidium, cesium, magnesium, calcium, strontium, barium, zinc, aluminum, titanium, cobalt, germanium, tin, lead, antimony, arsenicum and cerium; salts of such metals; alkoxides of such metals; and organic substances of such metals. Among them, titanium compounds (in particular, titanium alkoxides) such as titanium tetra-n-butoxide, titanium tetra-n-propoxide and titanium tetra-isopropoxide; lead compounds such as tetraphenyl lead, lead acetate and lead stearate, and tin compounds such as dioctyltin dilaurate are preferable. The amount of the transesterification reaction catalyst to be used is not particularly limited, and the amount relative to the total amount of the polycarbonate diol as a raw material is preferably 0.001 to 0.1% by mass.

The transesterification reaction can be controlled by measurement with GPC over time. For example, progression of the transesterification reaction can be confirmed by extracting a reaction product and subjecting it to measurement with GPC. For example, a peak derived from the polyethylene glycol as a raw material is gradually smaller over time along with progression of the transesterification reaction, and the peak disappears to thereby allow substantially the entire amount of the structure derived from the polyethylene glycol to be confirmed to be introduced to any terminal of the polycarbonate diol and the interior of the polymer chain.

In production of the block copolymer and the aqueous composition, a dehydration treatment or the like of each raw material may be conducted as a pre-treatment before the transesterification reaction. The catalyst poison (for example, an acidic phosphoric acid ester compound) of the transesterification reaction catalyst may also be added as a post-treatment of the transesterification reaction.

While the block copolymer and the aqueous composition can be obtained by the method in which the polycarbonate diol represented by the general formula (3) and the polyethylene glycol represented by the general formula (4) are subjected to the transesterification reaction, as described above, these can also be obtained by the following method other than such a method.

Examples include a method in which a diol as a raw material of the polycarbonate diol represented by the general formula (3), a carbonate as a raw material of the polycarbonate diol represented by the general formula (3), and the polyethylene glycol represented by the general formula (4) are subjected to a polycondensation reaction. In order to allow such a polycondensation reaction to progress, however, heating is usually required at a high temperature for a long time. Therefore, the problems of a high possibility of the occurrence of an undesirable side reaction and an increase in workload during switching of production items may be caused. From such a viewpoint, the method of producing the block copolymer of the present embodiment is preferably mainly not the polycondensation reaction but the transesterification reaction.

The ratio of the polycarbonate structure represented by the general formula (1) and the polyoxyethylene structure represented by the general formula (2) in the aqueous composition substantially corresponds to the ratio of the polycarbonate diol represented by the general formula (3) and the polyethylene glycol represented by the general formula (4) to be used as raw materials.

The content of the polyoxyethylene structure in each of the block copolymer and the aqueous composition can be measured by, for example, the following method.

1. Each of the block copolymer and the aqueous composition is subjected to alkalinolysis in an ethanolic potassium hydroxide solution, to reproduce a diol component.
2. Hydrochloric acid is added for neutralization, with phenolphthalein as an indicator.
3. A salt precipitated is separated by filtration, and the filtrate is subjected to GPC measurement.
4. The concentration of the polyethylene glycol in the filtrate is determined from the calibration curve separately created. The mass of the polyethylene glycol is calculated based on the concentration, and divided by the mass of each of the block copolymer and the aqueous composition used in alkalinolysis, and the resulting value is defined as the content of the polyethylene glycol.

The molecular weight of the polyoxyethylene structure contained in each of the block copolymer and the aqueous composition can be determined by subjecting the block copolymer to alkalinolysis to provide a diol component, subjecting the component to GPC measurement, and comparing the result with the value in GPC measurement of a polyethylene glycol whose molecular weight is known.

The block copolymer is excellent in water dilutability and the like, and therefore can be suitably used in the aqueous composition. The aqueous composition of the present invention can be applied to various applications including an aqueous coating, an aqueous ink and an aqueous viscous adhesive. That is, the block copolymer and the aqueous composition can be used as an aqueous ink composition, an aqueous coating composition, and an aqueous viscous adhesive composition.

The aqueous composition of the present invention is also preferably an aqueous composition further including an aqueous solvent (for example, water or alcohols). The block copolymer included in the aqueous composition are excellent in water dilutability, and therefore blending properties in a water solvent are excellent. Accordingly, even if other blended material is used in combination, the blended material in the aqueous composition can also be enhanced in stability.

The aqueous composition of the present invention is also preferably an aqueous composition further including a compound having reactivity with a hydroxyl group. Examples of the compound having reactivity with a hydroxyl group include a compound having one or more functional groups (reactive functional groups) that can react with a hydroxyl group, on average in the molecule. A compound having two or more reactive functional groups in the molecule can also be used as a crosslinking agent because the compound can crosslink the block copolymer. Examples of such a crosslinking agent include a melamine resin, an isocyanate compound and a block isocyanate compound. A commercial product can also be used therefor, and can be selected in order to allow performances to be exhibited depending on the application. The crosslinking agent for use in the aqueous composition can be used singly or in combination of two or more. The compound (crosslinking agent or the like) to be combined with the block copolymer can be appropriately selected depending on the application of the aqueous composition. The compound (crosslinking agent) also preferably has water dilutability in terms of ease of blending with the aqueous composition.

As such a compound (crosslinking agent or the like) being a melamine resin, a methyl-etherified melamine resin, a mixed etherified melamine resin of methyl ether and ethyl ether, and the like are commercially available. As such a compound being an isocyanate compound or a block isocyanate compound, a product to which a nonionic hydrophilic group such as a polyethylene glycol monomethyl ether or an anionic hydrophilic group such as a sulfonic acid group is introduced, and the like are commercially available. Examples of such commercial products include "Duranate WT30-100" (produced by Asahi Kasei Chemicals Corporation). On the other hand, even if such an isocyanate

compound (crosslinking agent or the like) has no water dilutability, an isocyanate compound having a low viscosity (for example, preferably having a viscosity at 25°C of 600 mPa•s or less) can also be preferably used. Examples of such a commercial product include "Duranate TLA-100" and "Duranate TUL-100" (both produced by Asahi Kasei Chemicals Corporation).

The aqueous composition of the present embodiment is also preferably an aqueous composition further including both of an aqueous solvent and a compound having reactivity with a hydroxyl group.

When the aqueous composition including an aqueous solvent is obtained from the block copolymer or the aqueous composition including no solvent, the block copolymer or the aqueous composition may be directly added to an aqueous solvent, or a diluted product in which the block copolymer or the aqueous composition is diluted with an aqueous solvent in advance may be added. The aqueous solvent includes water, and a mixed solvent of water and other organic solvent. Such an organic solvent that can be used in combination with water is preferably a hydrophilic solvent that can be mixed with water without any occurrence of phase separation. Examples of the hydrophilic solvent include ethanol, butyl cellosolve, methyl ethyl ketone, diethylene glycol diethyl ether and propylene glycol monomethyl ether acetate.

The dispersed particle size of the block copolymer or the aqueous composition in the aqueous solvent is not particularly limited, and the upper limit thereof is preferably 500 nm or less, more preferably 300 nm or less, further preferably 200 nm or less. When the water dispersed particle size is the above upper limit or less, dispersion stability of the block copolymer or the aqueous composition in water is excellent. The water dispersed particle size can be controlled by adjusting the amount and the average molecular weight of the polyethylene glycol to be used in production of the block copolymer, and also the average molecular weight of the block copolymer or the aqueous composition. The water dispersed particle size can be measured according to a method in Examples described later.

The mixing ratio of respective components (block copolymer, polycarbonate diol, water, other solvent, and the like) in the diluted product is not limited, and can be appropriately selected as a suitable condition in consideration of the application and physical properties.

The content of the block copolymer in the diluted product is not particularly limited, and is preferably 20 to 70% by mass, more preferably 30 to 60% by mass. The content of the aqueous composition in the diluted product is not particularly limited, and is preferably 20 to 70% by mass, more preferably 30 to 60% by mass.

An aqueous coating composition including the block copolymer or the aqueous composition can also be obtained. The aqueous coating composition preferably includes the block copolymer or the aqueous composition, and the compound having reactivity with a hydroxyl group. The aqueous coating composition containing the block copolymer or the aqueous composition can provide a coating film excellent in elasticity, chipping resistance, adhesiveness, chemical resistance, abrasion resistance, water resistance, and texture properties.

An aqueous ink composition including the block copolymer or the aqueous composition can also be obtained. The aqueous ink containing the block copolymer or the aqueous composition can provide a coating film excellent in weather resistance and the like. The aqueous ink composition preferably includes the block copolymer or the aqueous composition, and the compound having reactivity with a hydroxyl group.

An aqueous viscous adhesive composition including the block copolymer or the aqueous composition can also be obtained. The block copolymer or the aqueous composition can be contained to thereby result in improvements in hydrolysis resistance, and heat resistance. The aqueous viscous adhesive composition preferably includes the block copolymer or the aqueous composition, and the crosslinking agent that can react with a hydroxyl group.

The aqueous viscous adhesive can be suitably used in, for example, an application for lamination of respective components of a flat panel display. In a process of manufacturing a flat panel display, the aqueous viscous adhesive is demanded to have not only adhesion properties of the display to other members, but also characteristics such as transparency, moist-heat resistance and hydrolysis resistance. The aqueous viscous adhesive composition of the present invention can be used as an aqueous viscous adhesive to thereby allow such characteristics to be maintained at high levels.

Each of the block copolymer and the aqueous composition may be allowed to react with, for example, an isocyanate compound and thereafter react with (meth)acrylates. Each of the block copolymer and the aqueous composition can be subjected to such a reaction and thus used as a raw material of an UV oligomer that can be used in the aqueous composition. Each of the block copolymer and the aqueous composition of the present embodiment can be used as a raw material or the like of a water dispersion of a polyurethane fine particle (for example, polyurethane dispersion).

The block copolymer and the aqueous composition, and the diluted product, the aqueous coating composition, the aqueous ink composition, and the aqueous viscous adhesive composition thereof may further contain, for example, a polymer such as acrylic polyol, polyester polyol and a polyurethane dispersion; a curing accelerator such as an organometal compound of tin, zinc, lead, and the like; an antioxidant such as hindered phenol; an ultraviolet absorber such as benzotriazole and benzophenone; a light stabilizer such as hindered amine; a pigment and a dye such as titanium oxide, carbon black, indigo, quinacridone, pearl mica and an aluminum paste; and other additives such as a

rheology control agent, a leveling agent, a dispersant and a defoamer, if necessary.

## Examples

Hereinafter, the present invention is described with reference to Examples and Comparative Examples, but the present invention is not intended to be limited to the following Examples.

(Measurement of number average molecular weight)

The number average molecular weight corresponded to a number average molecular weight in terms of standard polystyrene by GPC measurement, and was measured in the following conditions.

Apparatus: "HLC-8120GPC (trade name)" manufactured by Tosoh Corporation
Column: "TSKgel Super H1000 (trade name)" × one column, "TSKgel Super H2000 (trade name)" × one column, "TSKgel Super H3000 (trade name)" × one column, manufactured by Tosoh Corporation
Carrier: tetrahydrofuran
Detection method: differential refractometer

(Measurement of content of polyethylene glycol in aqueous composition)

About 5 g of an aqueous composition sample was precisely weighed in a 100-mL eggplant flask, and 50 g of ethanol and 4.0 g of potassium hydroxide were added thereto. A magnetic stirring bar was placed thereinto and stirring was conducted in an oil bath set at 105 ± 5°C for 1 hour to subject a carbonate bond moiety to alkalinolysis. Thereafter, the resultant was cooled to room temperature, a phenolphthalein indicator was added in a few drops to the reaction liquid, and hydrochloric acid was added until the color disappeared. About 40 mL of the supernatant liquid was taken, transferred to a sample bottle, and left to still stand in a refrigerator having an inner temperature of 5°C overnight. After still standing, the supernatant liquid was filtered with a membrane filter having a pore diameter of 0.45 μm, to provide a filtrate. The resulting filtrate was subjected to GPC analysis in the above conditions. Herein, the concentration of the polyethylene glycol in the sample was determined from the concentration calibration curve separately created by use of a polyethylene glycol having the same molecular weight as that of the polyethylene glycol component included in the aqueous composition, the mass was calculated from the amount of a solution and divided by the mass of the aqueous composition used in alkalinolysis, and the resulting value was defined as the content of the polyethylene glycol in the aqueous composition.

(Measurement of hydroxyl value)

Measurement was conducted according to JIS K1557-1:2007.

(Measurement of water dilutability)

About 2 g of a sample (heated and molten in advance if the sample was a solid at normal temperature) and about 3 g of water were placed in a 10-mL transparent sample bottle made of resin, and stirred with a medicine spoon for 5 to 10 minutes until the resultant was stable, to provide a liquid diluted with water. The liquid diluted with water was defined as the initial state, and the appearance of the liquid diluted with water was visually evaluated. The liquid diluted with water was then visually observed after being left to still stand at normal temperature for one week, and rated according to the following criteria.

A: neither separation nor precipitation of the component was observed.
B: while no separation of the component was confirmed, slight precipitation of the component was confirmed (no problem about water dilutability in practical use).
C: separation of the component was confirmed.

(Measurement of water dispersed particle size)

The volume average particle size of the aqueous composition in the sample was measured by "Nanotrac UPA" manufactured by Nikkiso Co., Ltd.

[Reactivity with isocyanate crosslinking agent]

About 10 g of the aqueous composition in each of Examples and Comparative Examples was weighed in a 50-mL sample bottle, and water was added thereto so that the resin content was 40% by mass. Furthermore, "Duranate WT30-100 (trade name)" was added to the copolymer so that the molar ratio of NCO/OH was 1.25, and the resultant was stirred with a medicine spoon for 10 minutes. A glass plate (JIS R3202, 75 mm × 150 mm in rectangle, 1 mm in thickness) was coated therewith by the above method so that the thickness of a film after drying was 40 to 50 μm, and the resultant was dried on a horizontal table in an atmosphere of 23°C and 50% RH for one week to provide a coating film. The appearance, curability and drying properties of the coating film were evaluated by the following methods.

(Appearance of coating film)

The uniformity, transparency and smoothness of the coating film were visually observed and rated based on the following criteria.

A: no defect about all of uniformity, transparency and smoothness of the coating film was confirmed.
B: while slight clouding was confirmed in the coating film, there was no problem about appearance in practical use.
C: any defect about at least one of uniformity, transparency and smoothness of the coating film was confirmed.

(Curability of coating film)

First, about 40 mL of acetone was placed in a 50-mL sample bottle. About 0.2 g of the coating film was scraped off, surrounded by 400-mesh stainless steel degreased, and immersed in acetone for 24 hours. The coating film was then taken out from acetone, dried in a drier at 105°C for 1 hour, and thereafter left to still stand at room temperature for 1 hour. The weight was precisely weighed, and the acetone-insoluble fraction of the coating film was measured based on the following formula. A larger acetone-insoluble fraction (%) was determined to mean higher curability.

$$\text{Curability of coating film (\%)} = \text{(Weight of coating film (acetone-insoluble fraction) after treatment)} / \text{(Weight of coating film before treatment)} \times 100$$

(Drying properties of coating film)

Sticky feeling was rated based on the following criteria by touching the coating film with fingers.

Good: no sticky feeling (no defect)
Bad: sticky feeling (defect)

[Evaluation of physical properties of coating film: blending effect on aqueous two-pack urethane coating]

(Breaking elongation and breaking stress of coating film)

First, a repeelable tacky paper tape was attached to an edge side of a polypropylene plate (produced by Takiron Co., Ltd., trade name "P310A", 150 mm × 150 mm, 2 mm in thickness). The tacky tape was provided to allow the coating not to flow out from the surface of the polypropylene plate, and attached to regulate the thickness of a coating film. The coating was then dropped on the surface of the polypropylene plate for coating by use of a glass rod having a diameter of 8 mm so that the thickness of a film after drying was 50 to 70 μm. Subsequently, the resultant was left to still stand on a horizontal table in an atmosphere of 23°C and 50% RH for one week for drying, to form a coating film. The coating film was peeled from the polypropylene plate, and cut out in a size of 10 mm in width and 100 mm in length to provide a tensile test sample. A tensile tester ("Tensilon RTE-1210" manufactured by Orientec Co., Ltd.) was used to measure breaking elongation and breaking stress of the tensile test sample. In the tensile test, the atmosphere temperature was set at 23°C, the humidity was set at 50% RH, the distance between chucks was 50 mm and the tensile speed was 50 mm/min.

(Chemical resistance)

A repeelable tacky paper tape as a spacer was attached to each of both ends of a glass plate (JIS R3202; 75 mm × 150 mm, 1 mm in thickness) for a required number. The tacky tape was attached to regulate the thickness of a coating film. The coating was then dropped for coating by use of a glass rod having a diameter of 8 mm so that the thickness of a film after drying was 40 to 50 μm. Subsequently, the resultant was left to still stand on a horizontal table in an atmosphere of 23°C and 50% RH for one week for drying, to form a coating film. The surface of the coating film was scratched by a cotton swab impregnated with xylene under a constant force, and the number of times of reciprocation until any defect such as scratch and whitening was visually confirmed was counted. A larger number of such times was evaluated to mean more excellent chemical resistance.

(Scratch resistance)

The surface of an aluminum plate (JIS H4000 (A5052P); 75 mm × 150 mm, 1 mm in thickness) was spray-coated with a commercially available solvent-based two-pack acrylic urethane white enamel coating ("Mightylac" produced by Nipponpaint Co., Ltd.), preliminarily dried at room temperature and dried at 80°C for 2 hours, and thereafter aged at room temperature for two weeks or more. The surface was polished by #1000 sand paper until the glossiness thereof at 60 degrees reached 10% or less, to provide a substrate. A repeelable tacky paper tape as a spacer was attached to each of both ends of the substrate for a required number. The tacky tape was attached to regulate the thickness of a coating film. The coating was then dropped on the surface of the substrate for coating by use of a glass rod having a diameter of 8 mm so that the thickness of a film after drying was 40 to 50 μm. Subsequently, the resultant was left to still stand on a horizontal table in an atmosphere of 23°C and 50% RH for one week for drying, to form a coating film. The surface of the coating film was scratched by a brass wire brush under a constant force 10 times of reciprocation. The percent value obtained by dividing the glossiness at 60 degrees after scratching by the glossiness at 60 degrees before scratching (initial glossiness at 60 degrees/glossiness at 60 degrees after scratching) was determined. The glossiness at 60 degrees was measured according to JIS Z8741.

(Water resistance)

A repeelable tacky paper tape as a spacer was attached to each of both ends of a glass plate (JIS R3202; 75 mm × 75 mm, 1 mm in thickness) for a required number. The tacky tape was attached to regulate the thickness of a coating film. The coating was then dropped on the surface of the glass plate for coating by use of a glass rod having a diameter of 8 mm so that the thickness of a film after drying was 40 to 50 μm. Subsequently, the resultant was left to still stand on a horizontal table in an atmosphere of 23°C and 50% RH for one week for drying, to form a coating film. The film was immersed in water at 23°C for 24 hours, and the presence of defect such as whitening and swelling was visually confirmed.

(Adhesiveness)

Each of a polymethyl methacrylate plate (PMMA plate; trade name "Acrylite" produced by Mitsubishi Rayon Co., Ltd.) and an aluminum plate (Al plate; JIS H4000 (A5052P)) was used as a substrate. A repeelable tacky paper tape as a spacer was attached to each of both ends of the PMMA plate and the Al plate for a required number. The tacky tape was attached to regulate the thickness of a coating film. The coating was then dropped on each of the surfaces of the PMMA plate and the Al plate for coating by use of a glass rod having a diameter of 8 mm so that the thickness of a film after drying was 40 to 50 μm. The resultant was then left to still stand on a horizontal table in an atmosphere of 23°C and 50% RH for one week for drying, to form a coating film on each of the plates.

The coating film was incised by a cutter knife according to the cross-cut method in JIS K5600-5-6:1999 so that 100 masses having a size of 1 mm × 1 mm were made. A cellophane tape was attached onto the surface of the coating film incised, and peeled off to evaluate the number of remaining masses.

[Example 1]

A four-neck flask equipped with a stirrer, a thermometer, a reflux condenser tube and a nitrogen blowing tube was purged with nitrogen. Thereto were loaded 90 parts by mass of "Duranol T5652 (trade name)" (copolymerized polycarbonate diol in which 1,5-pentanediol and 1,6-hexanediol were used as diols, having a number average molecular weight of about 2000; Diol composition; 1,5-pentanediol/1,6-hexanediol = 50% by mole/50% by mole) produced by Asahi Kasei Chemicals Corporation, 10 parts by mass of "Polyethylene Glycol 600 (trade name)" (polyethylene glycol having a number average molecular weight of about 600) produced by Wako Pure Chemical Industries, Ltd., and dioctyltin

laurate (transesterification reaction catalyst) whose proportion was adjusted so as to be 140 ppm relative to the copolymerized polycarbonate diol as a raw material. The resultant was then stirred for 6 hours with the temperature in the reactor being kept at about 150°C. Thereafter, the temperature in the reactor was decreased to room temperature, and an aqueous composition including a block copolymer and a polycarbonate diol was obtained.

In the transesterification reaction, progression of the reaction was confirmed by subjecting the reaction liquid to GPC measurement over time to thereby confirm disappearance of the peak derived from the polyethylene glycol as a raw material and appearance of the peak derived from the product. It was also confirmed with respect to the aqueous composition finally obtained that the reaction progressed almost quantitatively based on the amounts of the raw materials loaded and the block copolymer had a structure transesterified.

In addition, the proportion of the hydroxyl group in each terminal structure of the block copolymer and the polycarbonate diol in the aqueous composition was confirmed according to a method described below, and confirmed to be 95% by mole or more. First, the aqueous composition was heated under reduced pressure to provide a fraction in an amount corresponding to about 1 to 2% by mass, and the fraction was recovered with alcohols such as ethanol as a solvent to provide a measurement solution. The measurement solution was subjected to gas chromatography (GC) analysis, and the proportion was calculated based on the following formula from the peak area value of the resulting chromatogram.

Proportion of hydroxyl group in total amount of terminal groups (% by mole) = (Total peak area of diol in which each of both terminals is hydroxyl group)/(Total peak area of alcohols including diol (excluding ethanol)) × 100

The type of substituent R in the general formula (1) of the block copolymer and the type of substituent R in the polycarbonate diol represented by the general formula (3) in the aqueous composition were confirmed according to a method described below, and a pentylene group occupied 46.5% by mole and a hexylene group occupied 51.6% by mole.

First, about 1 g of the aqueous composition and 0.5 g of 1,3-propanediol as an internal standard substance for GC analysis were added into a 100 mL eggplant flask. Thereto were added 30 mL of ethanol and 3.95 g of potassium hydroxide, a magnetic stirring bar was further placed therein, and stirring was conducted in an oil bath set at 105 ± 5°C for 1 hour to thereby subject a carbonate bond moiety in the aqueous composition to alkalinolysis. Thereafter, the resultant was cooled to room temperature, a phenolphthalein indicator was added in a few drops to the reaction liquid, and hydrochloric acid was added in small portions until the color disappeared. After the color disappeared, the supernatant liquid was transferred to a sample bottle, the same amount of ethanol was added thereto, and the resultant was left to still stand in a refrigerator having an inner temperature of 5°C overnight. After still standing, the supernatant liquid was filtered with a membrane filter having a pore diameter of 0.45 μm, to provide a filtrate. The filtrate was subjected to GC analysis, the factor of each component, determined in advance, was converted from the relationship between the peak area and the weight ratio, and the proportion (% by mole) was calculated based on the following formula (i).

$$\text{Proportion (\% by mole)} = \{(\text{Molar amount of structure in which R in general formula (1) represents pentylene group or hexylene group}) + (\text{Molar amount of component in which R in general formula (3) represents pentylene group or hexylene group})\}/\{(\text{Total molar amount of structure represented by general formula (1)}) + (\text{Total molar amount of component represented by general formula (3)})\} \times 100 \quad \text{(i)}$$

• GC analysis conditions

Apparatus: GC-14B manufactured by Shimadzu Corporation
Column: G-300 capillary column (20 m)
Detector: FID
Carrier gas: helium
Injection temperature: 250°C
Column temperature: 100°C to 210°C at a temperature rise of 10°C/min

The appearance, the hydroxyl value, the number average molecular weight, the water dilutability and the water dispersed particle size of each of the resulting block copolymer and aqueous composition were evaluated.

[Example 2]

A four-neck flask equipped with a stirrer, a thermometer, a reflux condenser tube and a nitrogen blowing tube was purged with nitrogen. Thereto were loaded 75 parts by mass of "Duranol T5652 (trade name)" (copolymerized polycarbonate diol in which 1,5-pentanediol and 1,6-hexanediol were used as diols, having a number average molecular weight of about 2000; Diol composition; 1,5-pentanediol/1,6-hexanediol = 50% by mole/50% by mole) produced by Asahi Kasei Chemicals Corporation, 25 parts by mass of "Polyethylene Glycol 1000 (trade name)" (polyethylene glycol having a number average molecular weight of about 1000) produced by Wako Pure Chemical Industries, Ltd., and dioctyltin dilaurate (transesterification reaction catalyst) whose proportion was 140 ppm relative to the copolymerized polycarbonate diol as a raw material. The resultant was then stirred for 6 hours with the temperature in the reactor being kept at about 150°C. Thereafter, the temperature in the reactor was decreased to room temperature, and an aqueous composition including a block copolymer and a polycarbonate diol was obtained.

In the transesterification reaction, progression of the reaction was confirmed by subjecting the reaction liquid to GPC measurement over time to thereby confirm disappearance of the peak derived from the polyethylene glycol as a raw material and appearance of the peak derived from the product. It was also confirmed by GPC measurement over time with respect to the aqueous composition finally obtained that the reaction progressed almost quantitatively based on the amounts of the raw materials loaded and the block copolymer had a structure transesterified.

In addition, the proportion of the hydroxyl group in each terminal structure of the block copolymer and the polycarbonate diol in the aqueous composition was confirmed according to the method in Example 1, and found to be 95% by mole or more.

In addition, the type of substituent R in the general formula (1) of the block copolymer and the type of substituent R in the polycarbonate diol represented by the general formula (3) in the aqueous composition were confirmed according to the method in Example 1, and a pentylene group occupied 46.8% by mole and a hexylene group occupied 51.2% by mole.

The appearance, the hydroxyl value, the number average molecular weight, the water dilutability and the water dispersed particle size of each of the resulting block copolymer and aqueous composition were evaluated.

[Example 3]

A four-neck flask equipped with a stirrer, a thermometer, a reflux condenser tube and a nitrogen blowing tube was purged with nitrogen. Thereto were loaded 85.5 parts by mass of "Duranol T5652 (trade name)" (copolymerized polycarbonate diol in which 1,5-pentanediol and 1,6-hexanediol were used as diols, having a number average molecular weight of about 2000; Diol composition; 1,5-pentanediol/1,6-hexanediol = 50% by mole/50% by mole) produced by Asahi Kasei Chemicals Corporation, 10 parts by mass of "Polyethylene Glycol 600 (trade name)" (polyethylene glycol having a number average molecular weight of about 600) produced by Wako Pure Chemical Industries, Ltd., 4.5 parts by mass of 1,5-pentanediol as a molecular weight modifier, and dioctyltin dilaurate (transesterification reaction catalyst) whose proportion was adjusted so as to be 140 ppm relative to the copolymerized polycarbonate diol. The resultant was then stirred for 6 hours with the temperature in the reactor being kept at about 150°C. Thereafter, the temperature in the reactor was decreased to room temperature, and an aqueous composition including a block copolymer and a polycarbonate diol was obtained.

In the transesterification reaction, progression of the reaction was confirmed by subjecting the reaction liquid to GPC measurement over time to thereby confirm disappearance of the peak derived from the polyethylene glycol as a raw material and appearance of the peak derived from the product. It was also confirmed by GPC measurement over time with respect to the aqueous composition finally obtained that the reaction progressed almost quantitatively based on the amounts of the raw materials loaded and the block copolymer had a structure transesterified.

In addition, the proportion of the hydroxyl group in each terminal structure of the block copolymer and the polycarbonate diol in the aqueous composition was confirmed according to the method in Example 1, and found to be 95% by mole or more.

In addition, the type of substituent R in the general formula (1) of the block copolymer and the type of substituent R in the polycarbonate diol represented by the general formula (3) in the aqueous composition were confirmed according to the method in Example 1, and a pentylene group occupied 47.3% by mole and a hexylene group occupied 50.7% by mole.

The appearance, the hydroxyl value, the number average molecular weight, the water dilutability and the water dispersed particle size of each of the resulting block copolymer and aqueous composition were evaluated.

Herein, the analysis results of the content and the like of the polyethylene glycol in the aqueous composition of Example 3 are described in detail by way of example. A measurement sample was prepared according to the method described in the section "(Measurement of content and the like of polyethylene glycol in aqueous composition)", and was subjected to GPC analysis. As a result, the molecular weight distribution (Mw/Mn) of the polyethylene glycol in the measurement sample, calculated by GPC measurement, was substantially the same as the molecular weight distribution (Mw/Mn) of the polyethylene glycol as a raw material of the block copolymer. The value of n in the general formula (2) with respect to the polyethylene glycol in the sample was 13.5. Furthermore, the concentration calibration curve was created using the polyethylene glycol as a raw material. The concentration of the polyethylene glycol in the sample was determined based on the concentration calibration curve, and was 0.88%.

The concentration of the polyethylene glycol was multiplied by the total amount of the aqueous composition and ethanol used, to determine the mass of the polyethylene glycol, and the mass was calculated to be 0.47 g. The proportion as the value obtained by dividing the mass of the polyethylene glycol by the mass of the aqueous composition subjected to alkalinolysis (the content of the polyethylene glycol in the aqueous composition) was 9.4%. The following formula is shown below as reference.

$$(5.0094\ g + 48.46\ g) \times 0.88/100 = 0.47\ g$$

$$0.47\ g/5.0094\ g \times 100 = 9.4\%$$

[Example 4]

The same manner as in Example 1 was performed except that "Duranol T5651 (trade name)" (copolymerized polycarbonate diol in which 1,5-pentanediol and 1,6-hexanediol were used as diols, having a number average molecular weight of about 1000; Diol composition; 1,5-pentanediol/1,6-hexanediol = 50% by mole/50% by mole) produced by Asahi Kasei Chemicals Corporation was used as polycarbonate diol, to thereby provide an aqueous composition including a block copolymer and a polycarbonate diol.

In the transesterification reaction, progression of the reaction was confirmed by subjecting the reaction liquid to GPC measurement over time to thereby confirm disappearance of the peak derived from the polyethylene glycol as a raw material and appearance of the peak derived from the product. It was also confirmed by GPC measurement over time with respect to the aqueous composition finally obtained that the reaction progressed almost quantitatively based

on the amounts of the raw materials loaded and the block copolymer had a structure transesterified.

In addition, the proportion of the hydroxyl group in each terminal structure of the block copolymer and the polycarbonate diol in the aqueous composition was confirmed according to the method in Example 1, and found to be 95% by mole or more.

In addition, the type of substituent R in the general formula (1) of the block copolymer and the type of substituent R in the polycarbonate diol represented by the general formula (3) in the aqueous composition were confirmed according to the method in Example 1, and a pentylene group occupied 46.6% by mole and a hexylene group occupied 51.6% by mole.

The appearance, the hydroxyl value, the number average molecular weight, the water dilutability and the water dispersed particle size of each of the resulting block copolymer and aqueous composition were evaluated.

[Example 5]

A four-neck flask equipped with a stirrer, a thermometer, a reflux condenser tube and a nitrogen blowing tube was under a nitrogen atmosphere, and thereto were loaded 90 parts by mass of "Duranol T5651 (trade name)" (copolymerized polycarbonate diol in which 1,5-pentanediol and 1,6-hexanediol were used as diols, having a number average molecular weight of about 1000; Diol composition; 1,5-pentanediol/1,6-hexanediol = 50% by mole/50% by mole) produced by Asahi Kasei Chemicals Corporation, 5 parts by mass of "Polyethylene Glycol 600 (trade name)" (polyethylene glycol having a number average molecular weight of about 600) produced by Wako Pure Chemical Industries, Ltd., 5 parts by mass of "Polyethylene Glycol 1000 (trade name)" (polyethylene glycol having a number average molecular weight of about 1000) produced by Wako Pure Chemical Industries, Ltd., and dioctyltin dilaurate as a transesterification reaction catalyst whose proportion was 140 ppm relative to the polycarbonate diol as a raw material. These were heated with stirring, and the temperature in the reactor was kept at about 150°C for 6 hours. Thereafter, the temperature was decreased to room temperature, and an aqueous composition including a block copolymer and a polycarbonate diol was obtained.

In the transesterification reaction, progression of the reaction was confirmed by subjecting the reaction liquid to GPC measurement over time to thereby confirm disappearance of the peaks derived from the raw materials and appearance of the peak derived from the product. It was also confirmed by GPC measurement over time with respect to the aqueous composition finally obtained, including a block copolymer and a polycarbonate diol, that the reaction progressed almost quantitatively based on the amounts of the raw materials loaded and the corresponding structure was also included.

In addition, the proportion of the hydroxyl group in each terminal structure of the block copolymer and the polycarbonate diol in the aqueous composition was confirmed according to the method in Example 1, and found to be 95% by mole or more.

In addition, the type of substituent R in the general formula (1) of the block copolymer and the type of substituent R in the polycarbonate diol represented by the general formula (3) in the aqueous composition were confirmed according to the method in Example 1, and a pentylene group occupied 47.2% by mole and a hexylene group occupied 51.0% by mole.

The appearance, the hydroxyl value, the number average molecular weight, the water dilutability and the water dispersed particle size of each of the resulting block copolymer and aqueous composition were evaluated.

[Example 6]

The same manner as in Example 3 was performed except that dioctyltin dilaurate as a transesterification reaction catalyst was not used and the temperature in the reactor was set at 170°C and kept for 4 hours, to thereby provide an aqueous composition including a block copolymer and a polycarbonate diol.

In the transesterification reaction, progression of the reaction was confirmed by subjecting the reaction liquid to GPC measurement over time to thereby confirm disappearance of the peaks derived from the raw materials and appearance of the peak derived from the product. It was also confirmed by GPC measurement over time with respect to the aqueous composition finally obtained, including a block copolymer and polycarbonate diol, that the reaction progressed almost quantitatively based on the amounts of the raw materials loaded and the corresponding structure was also included.

In addition, the proportion of the hydroxyl group in each terminal structure of the block copolymer and the polycarbonate diol in the aqueous composition was confirmed according to the method in Example 1, and found to be 95% by mole or more.

In addition, the type of substituent R in the general formula (1) of the block copolymer and the type of substituent R in the polycarbonate diol represented by the general formula (3) in the aqueous composition were confirmed according to the method in Example 1, and a pentylene group occupied 47.5% by mole and a hexylene group occupied 50.4% by

mole.

The appearance, the hydroxyl value, the number average molecular weight, the water dilutability and the water dispersed particle size of each of the resulting block copolymer and aqueous composition were evaluated.

[Example 7]

A four-neck flask equipped with a stirrer, a thermometer, a reflux condenser tube and a nitrogen blowing tube was purged with nitrogen. Thereto were loaded 96 parts by mass of "Duranol T5652 (trade name)" (copolymerized polycarbonate diol in which 1,5-pentanediol and 1,6-hexanediol were used as diols, having a number average molecular weight of about 2000; Diol composition; 1,5-pentanediol/1,6-hexanediol = 50% by mole/50% by mole) produced by Asahi Kasei Chemicals Corporation, 4 parts by mass of "Polyethylene Glycol 1000 (trade name)" (polyethylene glycol having a number average molecular weight of about 1000) produced by Wako Pure Chemical Industries, Ltd., and dioctyltin dilaurate (transesterification reaction catalyst) whose proportion was adjusted so as to be 140 ppm relative to the copolymerized polycarbonate diol. The resultant was then stirred for 6 hours with the temperature in the reactor being kept at about 150°C. Thereafter, the temperature in the reactor was decreased to room temperature, and an aqueous composition including a block copolymer and polycarbonate diol was obtained.

In the transesterification reaction, progression of the reaction was confirmed by subjecting the reaction liquid to GPC measurement over time to thereby confirm disappearance of the peaks derived from the raw materials and appearance of the peak derived from the product. It was also confirmed by GPC measurement over time with respect to the aqueous composition finally obtained, including a block copolymer and polycarbonate diol, that the reaction progressed almost quantitatively based on the amounts of the raw materials loaded and the corresponding structure was also included.

In addition, the proportion of the hydroxyl group in each terminal structure of the block copolymer and the polycarbonate diol in the aqueous composition was confirmed according to the method in Example 1, and found to be 95% by mole or more.

In addition, the type of substituent R in the general formula (1) of the block copolymer and the type of substituent R in the polycarbonate diol represented by the general formula (3) in the aqueous composition were confirmed according to the method in Example 1, and a pentylene group occupied 46.6% by mole and a hexylene group occupied 51.5% by mole.

The appearance, the hydroxyl value, the number average molecular weight, the water dilutability and the water dispersed particle size of each of the resulting block copolymer and aqueous composition were evaluated.

[Example 8]

The same manner as in Example 1 was performed except that "Duranol T6002 (trade name)" (homogeneous polycarbonate diol in which 1,6-hexanediol was used as a diol, having a number average molecular weight of about 2000; Diol composition; 1,5-pentanediol/1,6-hexanediol = 50% by mole/50% by mole) produced by Asahi Kasei Chemicals Corporation was used as a polycarbonate diol, to thereby provide an aqueous composition including a block copolymer and a polycarbonate diol.

In the transesterification reaction, progression of the reaction was confirmed by subjecting the reaction liquid to GPC measurement over time to thereby confirm disappearance of the peaks derived from the raw materials and appearance of the peak derived from the product. It was also confirmed by GPC measurement over time with respect to the aqueous composition finally obtained, including a block copolymer and polycarbonate diol, that the reaction progressed almost quantitatively based on the amounts of the raw materials loaded and the corresponding structure was also included.

In addition, the proportion of the hydroxyl group in each terminal structure of the block copolymer and the polycarbonate diol in the aqueous composition was confirmed according to the method in Example 1, and found to be 95% by mole or more.

In addition, the type of substituent R in the general formula (1) of the block copolymer and the type of substituent R in the polycarbonate diol represented by the general formula (3) in the aqueous composition were confirmed according to the method in Example 1, and a hexylene group occupied 97.9% by mole.

The appearance, the hydroxyl value, the number average molecular weight, the water dilutability and the water dispersed particle size of each of the resulting block copolymer and aqueous composition were evaluated.

[Comparative Example 1]

The appearance, the hydroxyl value, the number average molecular weight and the water dilutability of "Duranol T5651 (trade name)" (copolymerized polycarbonate diol in which 1,5-pentanediol and 1,6-hexanediol were used as diols,

having a number average molecular weight of about 1000; Diol composition; 1,5-pentanediol/1,6-hexanediol = 50% by mole/50% by mole) produced by Asahi Kasei Chemicals Corporation were evaluated.

[Comparative Example 2]

A mixture was obtained in which 90 parts by mass of "Duranol T5651 (trade name)" (copolymerized polycarbonate diol in which 1,5-pentanediol and 1,6-hexanediol were used as diols, having a number average molecular weight of about 1000; Diol composition; 1,5-pentanediol/1,6-hexanediol = 50% by mole/50% by mole) produced by Asahi Kasei Chemicals Corporation and 10 parts by mass of "Polyethylene Glycol 600 (trade name)" (polyethylene glycol having a number average molecular weight of about 600) produced by Wako Pure Chemical Industries, Ltd. were mixed at normal temperature. The appearance, the hydroxyl value, the number average molecular weight and the water dilutability of the mixture were evaluated.

[Comparative Example 3]

The same operation as in Example 1 was conducted except that "MPG-081 (trade name)" (polyethylene glycol monomethyl ether having a hydroxyl value of about 83 and a number average molecular weight calculated from the hydroxyl value of about 675) produced by Nippon Nyukazai Co, Ltd. was used instead of "Polyethylene Glycol 600 (trade name)" (polyethylene glycol having a number average molecular weight of about 600) produced by Wako Pure Chemical Industries, Ltd. In the transesterification reaction, progression of the reaction was confirmed by subjecting the reaction liquid to GPC measurement over time to thereby confirm disappearance of the peaks derived from the raw materials and appearance of the peak derived from the product. It was then confirmed with respect to the copolymer finally obtained that the reaction progressed almost quantitatively and the copolymer had a structure transesterified.

The appearance, the hydroxyl value, the number average molecular weight, the water dilutability and the water dispersed particle size of the resulting copolymer were evaluated.

[Comparative Example 4]

The same manner as in Example 2 was performed except that "MPG-081 (trade name)" (polyethylene glycol monomethyl ether having a hydroxyl value of about 83 and a number average molecular weight calculated from the hydroxyl value of about 675) produced by Nippon Nyukazai Co, Ltd. was used instead of "Polyethylene Glycol 1000 (trade name)" (polyethylene glycol having a number average molecular weight of about 1000) produced by Wako Pure Chemical Industries, Ltd., to thereby provide a copolymer. In the transesterification reaction, progression of the reaction was confirmed by subjecting the reaction liquid to GPC measurement over time to thereby confirm disappearance of the peaks derived from the raw materials and appearance of the peak derived from the product. It was then confirmed with respect to the copolymer finally obtained that the reaction progressed almost quantitatively and the copolymer had a structure transesterified.

The appearance, the hydroxyl value, the number average molecular weight, the water dilutability and the water dispersed particle size of the resulting copolymer were evaluated.

[Comparative Example 5]

Mixed were 40 parts by mass of "Polytron R5007 (trade name)" (hydroxyl group-containing acrylic latex; hydroxyl value: 60 mgKOH/g resin, solid content: 42% by mass) produced by Asahi Kasei Chemicals Corporation, 7.9 parts by mass of ion-exchange water and 5.8 parts by mass of "Duranate WT30-100 (trade name)" (water dispersion type poly isocyanate; NCO content: 16.1%) produced by Asahi Kasei Chemicals Corporation so that the molar ratio of NCO/OH was 1.25, and stirred with a stirrer at 600 rpm for 10 minutes to provide a mixture. Thereafter, the mixture was left to still stand for 10 minutes for removal of air bubble therefrom, and thereafter filtered by a 110-mesh filter fabric made of a polyamide synthetic fiber, to provide a coating. The physical properties of a coating film of the resulting coating were evaluated.

[Example 9]

Mixed were 38 parts by mass of "Polytron R5007 (trade name)", 11.1 parts by mass of ion-exchange water and 1.8 parts by mass of the aqueous composition produced in Example 3 so that the resin mass ratio of "Polytron R5007 (trade name)" to the aqueous composition produced in Example 3 ("Polytron R5007"/aqueous composition) was 9/1 and the molar ratio of NCO/OH was 1.25, and stirred with a stirrer at 600 rpm for 20 minutes to provide a mixture. The mixture was visually observed, and found to have neither an insoluble material nor an aggregate. To the mixture

was added 6.6 parts by mass of "Duranate WT30-100 (trade name)", and further stirred at 600 rpm for 10 minutes. The same operation as in Comparative Example 5 was performed for removal of air bubbles from the mixture, to provide a coating. The physical properties of a coating film of the resulting coating were evaluated.

[Example 10]

Mixed were 35 parts by mass of "Polytron R5007 (trade name)", 14.4 parts by mass of ion-exchange water and 3.7 parts by mass of the aqueous composition produced in Example 3 so that the resin mass ratio of "Polytron R5007 (trade name)" to the aqueous composition produced in Example 3 ("Polytron R5007"/aqueous composition) was 8/2 and the molar ratio of NCO/OH was 1.25, and stirred with a stirrer at 600 rpm for 20 minutes to provide a mixture. The mixture was visually observed, and found to have neither an insoluble material nor an aggregate. To the mixture was added 7.3 parts by mass of "Duranate WT30-100 (trade name)", and further stirred at 600 rpm for 10 minutes. The same operation as in Comparative Example 5 was performed for removal of air bubbles from the mixture, to provide a coating. The physical properties of a coating film of the resulting coating were evaluated.

[Example 11]

Mixed were 30 parts by mass of "Polytron R5007 (trade name)", 17.0 parts by mass of ion-exchange water and 5.4 parts by mass of the aqueous composition produced in Example 3 so that the resin mass ratio of "Polytron R5007 (trade name)" to the aqueous composition produced in Example 3 ("Polytron R5007"/aqueous composition) was 7/3 and the molar ratio of NCO/OH was 1.25, and stirred with a stirrer at 600 rpm for 20 minutes to provide a mixture. The mixture was visually observed, and found to have neither an insoluble material nor an aggregate. To the mixture was added 7.6 parts by mass of "Duranate WT30-100 (trade name)", and further stirred at 600 rpm for 10 minutes. The same operation as in Comparative Example 5 was performed for removal of air bubbles from the mixture, to provide a coating. The physical properties of a coating film of the resulting coating were evaluated.

[Comparative Example 6]

Mixed were 35 parts by mass of "Polytron R5007 (trade name)", 14.4 parts by mass of ion-exchange water and 3.7 parts by mass of the composition produced in Comparative Example 4 so that the resin mass ratio of "Polytron R5007 (trade name)" to the composition produced in Comparative Example 4 ("Polytron R5007"/composition) was 8/2 and the molar ratio of NCO/OH was 1.25, and stirred with a stirrer at 600 rpm for 20 minutes to provide a mixture. The mixture was visually observed, and found to have neither an insoluble material nor an aggregate. To the mixture was added 6.5 parts by mass of "Duranate WT30-100 (trade name)", and further stirred at 600 rpm for 10 minutes. The same operation as in Comparative Example 5 was performed for removal of air bubbles from the mixture, to provide a coating. The physical properties of a coating film of the resulting coating were evaluated.

The results in each of Examples and Comparative Examples above are shown in each Table.

[Table 1]

| Evaluation item | | Example 1 | Example 2 | Example 3 | Example 4 | Example 5 | Example 6 | Example 7 | Example 8 |
|---|---|---|---|---|---|---|---|---|---|
| Content of structures of general formulae (1) and (3) (% by mass) | | 90 | 75 | 90 | 90 | 90 | 90 | 96 | 90 |
| Content of structure of general formula (2) (% by mass) | | 10 | 25 | 10 | 10 | 10 | 10 | 4 | 10 |
| Esterification reaction | | Performed | Performed | Performed | Performed | Performed | Performed | Performed | Performed |
| Hydroxyl value [mgKOH] | | 58.6 | 62.1 | 101.0 | 110.1 | 110.8 | 101.8 | 58.2 | 64.6 |
| Number average molecular weight | | 1915 | 1807 | 1110 | 1019 | 1013 | 1102 | 1960 | 1729 |
| Appearance at normal temperature (visual evaluation) | | Transparent viscous liquid | Transparent viscous liquid | Transparent viscous liquid | Transparent viscous liquid | Transparent viscous liquid | Transparent viscous liquid | Transparent viscous liquid | White solid |
| Water dilutability | Initial (visual) | Milky white liquid | Milky white liquid | Milky white liquid | Milky white liquid | Milky white liquid | Milky white liquid | White liquid | Milky white liquid |
| | Water-dispersed particle size [nm] | 164 | 103 | 151 | 153 | 133 | 158 | 262 | 170 |
| | After one week (visual) | A | A | A | A | A | A | B | A |
| Appearance of coating film (visual) | | A | A | A | A | A | A | A | B |
| Curability of coating film (acetone-insoluble fraction) | | 96% | 96% | 98% | 97% | 97% | 97% | 95% | 92% |
| Drying property of coating film (touch with fingers) | | Good | Good | Good | Good | Good | Good | Good | Good |

[Table 2]

| Evaluation item | | Comparative Example 1 | Comparative Example 2 | Comparative Example 3 | Comparative Example 4 |
|---|---|---|---|---|---|
| Content of structures of general formulae (1) and (3) (% by mass) | | 100 | 90 | 90 | 75 |
| Content of structure of general formula (2) (% by mass) | | 0 | 10 | 10*1 | 25*2 |
| Esterification reaction | | Not performed | Not performed (mixed) | Performed | Performed |
| Hydroxyl value [mgKOH] | | 109.6 | 109.4 | 58.5 | 62.7 |
| Number average molecular weight | | 1024 | 966 | 1865 | 1681 |
| Appearance at normal temperature (visual evaluation) | | Transparent viscous liquid | Transparent viscous liquid | Transparent viscous liquid | Transparent viscous liquid |
| Water dilutability | Initial (visual) | Undilutable with water | Undilutable with water | White liquid | Milky white liquid |
| | Water-dispersed particle size [nm] | Unmeasurable | Unmeasurable | 244 | 149 |
| | After one week (visual) | C | C | B | A |
| Appearance of coating film (visual) | | C | C | A | A |
| Curability of coating film (acetone-insoluble fraction) | | 88% | 90% | 91% | 83% |
| Drying property of coating film (touch with fingers) | | Bad | Bad | Bad | Bad |
| *1, *2: polyethylene glycol monomethyl ether was used. | | | | | |

[Table 3]

| Evaluation item | | Comparative Example 5 | Example 9 | Example 10 | Example 11 | Comparative Example 6 |
|---|---|---|---|---|---|---|
| Amount to be blended | [%]/R5007 | 0 | 10 | 20 | 30 | 20 |
| Breaking elongation | [%] | 17% | 78% | 116% | 142% | 131% |
| Breaking stress | [MPa] | 35 | 31 | 33 | 33 | 16 |
| Chemical resistance | [times] | 10 | 20 | 150 | 150 | 10 |
| Scratch resistance | [%] | 83 | 90 | 92 | 97 | 95 |
| Water resistance | Visual evaluation | No defect | No defect | No defect | No defect | Whitening |
| Adhesiveness (cross-cut method) | PMMA plate | 0 | 0 | 25 | 100 | 44 |
| | Al plate | 0 | 92 | 98 | 100 | 95 |

It was confirmed from the foregoing that the polycarbonate/polyoxyethylene block copolymer for an aqueous composition and the aqueous composition including the copolymer, of the present Example, were excellent in at least water dilutability and the stability of a blended material and exhibited various performances expected for polycarbonate diol.

Industrial Applicability

The polycarbonate/polyoxyethylene block copolymer for an aqueous composition and the aqueous composition including the copolymer, according to the present invention, are excellent in water dilutability, and can be suitably utilized in wide fields of an aqueous coating, an aqueous ink, an aqueous viscous adhesive and the like for use in automobiles, buses, railway vehicles, construction machines, agricultural machines, floors, walls and roofs of buildings, metalic products, mortar and concrete products, timber products, plastic products, and ceramic building materials such as a calcium silicate plate and a gypsum board.

## Claims

**1.** An aqueous coating composition comprising:

(i) a polycarbonate/polyoxyethylene block copolymer, comprising a polycarbonate structure represented by the following general formula (1) and a polyoxyethylene structure represented by the following general formula (2), wherein the proportion of the hydroxyl groups in the total amount of both terminal groups of the copolymer, measured according to the method disclosed in the description, is 90%by mole or more:

$$-(R\text{-}O\text{-}CO\text{-}O)_m- \qquad (1)$$

wherein R may be the same or different and represents a divalent aliphatic hydrocarbon group having 3 to 9 carbon atoms and optionally having a branched chain, or a divalent alicyclic hydrocarbon group having 6 to 8 carbon atoms, and m represents a number of 2 to 50; and

$$-(CH_2\text{-}CH_2\text{-}O)_n- \qquad (2)$$

wherein n represents a number of 13 to 46,
and
(ii) a polycarbonate diol represented by general formula (3):

$$HO\text{-}(R\text{-}O\text{-}CO\text{-}O)_p\text{-}R\text{-}OH \qquad (3)$$

wherein R may be the same or different and represents a divalent aliphatic hydrocarbon group having 3 to 9 carbon atoms and optionally having a branched chain, or a divalent alicyclic hydrocarbon group having 6 to 8 carbon atoms, and p represents a number of 2 to 50;
wherein the mass ratio of the total amount of the polycarbonate structure represented by the general formula (1) and the polycarbonate structure represented by $-(R\text{-}O\text{-}CO\text{-}O)_p-$ in the general formula (3) to the polyoxyethylene structure represented by the general formula (2) (polycarbonate structure/polyoxyethylene structure), measured according to the method disclosed in the description, is 50/50 to 95/5 and wherein R in the general formula (3) has the same meaning as R in the general formula (1), and p in the general formula (3) has the same meaning as m in the general formula (1).

**2.** The aqueous composition according to claim 1, wherein R in the polycarbonate/polyoxyethylene block copolymer in formula (1) represents both of a pentylene group and a hexylene group.

**3.** The aqueous composition according to claim 1 or 2, wherein, in the polycarbonate/polyoxyethylene block copolymer, a proportion of a total amount of a structure, in which R in the general formula (1) represents a pentylene group or a hexylene group, and a component, in which R in the general formula (3) represents a pentylene group or a hexylene group, calculated by the following formula (i), is 50% by mole or more:

$$\text{Proportion (\% by mole)} = \{(\text{Molar amount of structure in which R in general formula (1) represents pentylene group or hexylene group}) + (\text{Molar amount of component in which R in general formula (3) represents pentylene group or hexylene group})\}/\{(\text{Total molar amount of structure represented by general formula (1)}) + (\text{Total molar amount of component represented by general formula (3)})\} \times 100 \quad \text{(i)}.$$

4. A method of producing the aqueous composition according to any one of claims 1 to 3, comprising obtaining a transesterification reaction product of a polycarbonate diol represented by the following general formula (3) as a raw material and a polyethylene glycol represented by the following general formula (4) as a raw material:

$$HO\text{-}(R\text{-}O\text{-}CO\text{-}O)_p\text{-}R\text{-}OH \qquad (3)$$

wherein R may be the same or different and represents a divalent aliphatic hydrocarbon group having 3 to 9 carbon atoms and optionally having a branched chain, or a divalent alicyclic hydrocarbon group having 6 to 8 carbon atoms, and p represents a number of 2 to 50; and

$$HO\text{-}(CH_2\text{-}CH_2\text{-}O)_q\text{-}H \qquad (4)$$

wherein q represents a number of 13 to 46.

5. The method according to claim 1, 3 or 4, wherein R in the polycarbonate diol represented by the general formula (3) as a raw material represents at least a pentylene group and a hexylene group.

6. The method according to claim 5, wherein a proportion of a polycarbonate diol, in which R in the polycarbonate diol represented by the general formula (3) as a raw material represents a pentylene group or a hexylene group, is 50% by mole or more.

7. Use of the aqueous composition according to any one of claims 1 to 3, as an aqueous ink composition.

8. Use of the the aqueous composition according to any one of claims 1 to 3, as an aqueous viscous adhesive composition.

9. Use of a polycarbonate/polyoxyethylene block copolymer, comprising a polycarbonate structure represented by the following general formula (1) and a polyoxyethylene structure represented by the following general formula (2), wherein the proportion of the hydroxyl groups in the total amount of both terminal groups of the copolymer, measured according to the method disclosed in the description, is 90%by mole or more:

$$\text{-}(R\text{-}O\text{-}CO\text{-}O)_m\text{-} \qquad (1)$$

wherein R may be the same or different and represents a divalent aliphatic hydrocarbon group having 3 to 9 carbon atoms and optionally having a branched chain, or a divalent alicyclic hydrocarbon group having 6 to 8 carbon atoms, and m represents a number of 2 to 50; and

$$\text{-}(CH_2\text{-}CH_2\text{-}O)_n\text{-} \qquad (2)$$

wherein n represents a number of 13 to 46,
in an aqueous composition for coating according to any one of claims 1 to 3.

**Patentansprüche**

1. Wässrige Beschichtungszusammensetzung, umfassend:

(i) ein Polycarbonat/Polyoxyethylen-Blockcopolymer, umfassend eine Polycarbonatstruktur, die durch die folgende allgemeine Formel (1) dargestellt ist, und eine Polyoxyethylenstruktur, die durch die folgende allgemeine Formel (2) dargestellt ist, wobei der Anteil der Hydroxylgruppen in der Gesamtmenge beider Endgruppen des Copolymers, gemessen nach dem in der Beschreibung angegebenen Verfahren, 90% mol oder mehr beträgt:

$$-(R\text{-}O\text{-}CO\text{-}O)_m- \qquad (1)$$

wobei R gleich oder verschieden sein kann und eine zweiwertige aliphatische Kohlenwasserstoffgruppe mit 3 bis 9 Kohlenstoffatomen darstellt und optional eine verzweigte Kette aufweist, oder eine zweiwertige alicyclische Kohlenwasserstoffgruppe mit 6 bis 8 Kohlenstoffatomen darstellt, und m eine Zahl von 2 bis 50 darstellt; und

$$-(CH_2\text{-}CH_2\text{-}O)_n- \qquad (2)$$

wobei n eine Zahl von 13 bis 46 darstellt,
und
(ii) ein Polycarbonatdiol der allgemeinen Formel (3):

$$HO\text{-}(R\text{-}O\text{-}CO\text{-}O)_p\text{-}R\text{-}OH \qquad (3)$$

wobei R gleich oder verschieden sein kann und eine zweiwertige aliphatische Kohlenwasserstoffgruppe mit 3 bis 9 Kohlenstoffatomen darstellt und optional eine verzweigte Kette aufweist, oder eine zweiwertige alicyclische Kohlenwasserstoffgruppe mit 6 bis 8 Kohlenstoffatomen darstellt, und p eine Zahl von 2 bis 50 darstellt;
wobei das Massenverhältnis der Gesamtmenge der Polycarbonatstruktur, die durch die allgemeine Formel (1) dargestellt ist, und der Polycarbonatstruktur, die durch $-(R\text{-}O\text{-}CO\text{-}O)_p-$ in der allgemeinen Formel (3) dargestellt ist, zu der Polyoxyethylenstruktur, die durch die allgemeine Formel (2) dargestellt ist (Polycarbonatstruktur/Polyoxyethylenstruktur), gemessen gemäß dem in der Beschreibung angegebenen Verfahren, 50/50 bis 95/5 beträgt, und
wobei R in der allgemeinen Formel (3) die gleiche Bedeutung wie R in der allgemeinen Formel (1) aufweist und p in der allgemeinen Formel (3) die gleiche Bedeutung wie m in der allgemeinen Formel (1) aufweist.

2. Wässrige Zusammensetzung nach Anspruch 1, worin R in dem Polycarbonat/Polyoxyethylen-Blockcopolymer in Formel (1) sowohl eine Pentylengruppe als auch eine Hexylengruppe darstellt.

3. Wässrige Zusammensetzung nach Anspruch 1 oder 2, wobei in dem Polycarbonat/Polyoxyethylen-Blockcopolymer der Anteil der Gesamtmenge einer Struktur, in der R in der allgemeinen Formel (1) eine Pentylengruppe oder eine Hexylengruppe darstellt, und einer Komponente, in der R in der allgemeinen Formel (3) eine Pentylengruppe oder eine Hexylengruppe darstellt, berechnet durch die folgende Formel (i), 50 Mol-% oder mehr beträgt:

Anteil (Mol-%) = {(Molmenge der Struktur, in der R in der allgemeinen Formel (1) eine Pentylengruppe oder eine Hexylengruppe darstellt) + (Molmenge der Komponente, in der R in der allgemeinen Formel (3) eine Pentylengruppe oder eine Hexylengruppe darstellt)}/{(Gesamtmolmenge der Struktur, dargestellt durch die allgemeine Formel (1)) + (Gesamtmolmenge der Komponente, dargestellt durch die allgemeine Formel (3))} × 100 (i).

4. Verfahren zur Herstellung der wässrigen Zusammensetzung nach einem der Ansprüche 1 bis 3, umfassend

Gewinnen eines Umesterungsreaktionsprodukts eines Polycarbonatdiols der folgenden allgemeinen Formel (3) als Ausgangsmaterial und eines Polyethylenglykols der folgenden allgemeinen Formel (4) als Ausgangsmaterial:

$$HO\text{-}(R\text{-}O\text{-}CO\text{-}O)_p\text{-}R\text{-}OH \qquad (3)$$

wobei R gleich oder verschieden sein kann und eine zweiwertige aliphatische Kohlenwasserstoffgruppe mit 3 bis 9 Kohlenstoffatomen darstellt und optional eine verzweigte Kette aufweist, oder eine zweiwertige alicyclische Kohlenwasserstoffgruppe mit 6 bis 8 Kohlenstoffatomen darstellt, und p eine Zahl von 2 bis 50 darstellt; und

$$HO\text{-}(CH_2\text{-}CH_2\text{-}O)_q\text{-}H \qquad (4)$$

wobei q eine Zahl von 13 bis 46 darstellt.

**5.** Verfahren nach Anspruch 1, 3 oder 4, wobei R in dem Polycarbonatdiol der allgemeinen Formel (3) als Ausgangsmaterial mindestens eine Pentylengruppe und eine Hexylengruppe darstellt.

**6.** Verfahren nach Anspruch 5, wobei der Anteil eines Polycarbonatdiols, bei dem R in dem durch die allgemeine Formel (3) dargestellten Polycarbonatdiol als Ausgangsmaterial eine Pentylengruppe oder eine Hexylengruppe darstellt, 50 Mol-% oder mehr beträgt.

**7.** Verwendung der wässrigen Zusammensetzung nach einem der Ansprüche 1 bis 3 als wässrige Tinten- bzw. Druckfarbenzusammensetzung.

**8.** Verwendung der wässrigen Zusammensetzung nach einem der Ansprüche 1 bis 3 als wässrige viskose Klebstoffzusammensetzung.

**9.** Verwendung eines Polycarbonat/Polyoxyethylen-Blockcopolymers, umfassend eine Polycarbonatstruktur, die durch die folgende allgemeine Formel (1) dargestellt ist, und eine Polyoxyethylenstruktur, die durch die folgende allgemeine Formel (2) dargestellt ist, wobei der Anteil der Hydroxylgruppen an der Gesamtmenge beider Endgruppen des Copolymers, gemessen nach dem in der Beschreibung angegebenen Verfahren, 90% Mol oder mehr beträgt:

$$\text{-}(R\text{-}O\text{-}CO\text{-}O)_m\text{-} \qquad (1)$$

wobei R gleich oder verschieden sein kann und eine zweiwertige aliphatische Kohlenwasserstoffgruppe mit 3 bis 9 Kohlenstoffatomen darstellt und optional eine verzweigte Kette aufweist, oder eine zweiwertige alicyclische Kohlenwasserstoffgruppe mit 6 bis 8 Kohlenstoffatomen darstellt, und m eine Zahl von 2 bis 50 darstellt; und

$$\text{-}(CH_2\text{-}CH_2\text{-}O)_n\text{-} \qquad (2)$$

wobei n eine Zahl von 13 bis 46 darstellt,
in einer wässrigen Zusammensetzung zum Beschichten nach einem der Ansprüche 1 bis 3.

## Revendications

**1.** Composition de revêtement aqueuse comprenant :

(i) un copolymère séquencé de polycarbonate/polyoxyéthylène, comprenant une structure de polycarbonate représentée par la formule générale (1) suivante et une structure de polyoxyéthylène représentée par la formule générale (2) suivante, dans laquelle la proportion des groupes hydroxyles dans la quantité totale des deux groupes terminaux du copolymère, mesurée selon le procédé divulgué dans la description, est de 90 % en mole ou plus :

$$\text{-}(R\text{-}O\text{-}CO\text{-}O)_m\text{-} \qquad (1)$$

dans laquelle les R peuvent être identiques ou différents les uns des autres et représentent un groupe hydrocarboné aliphatique bivalent comportant de 3 à 9 atomes de carbone et comportant facultativement une chaîne ramifiée, ou un groupe hydrocarboné alicyclique bivalent comportant de 6 à 8 atomes de carbone, et m représente

une valeur numérique de 2 à 50 ; et

$$-(CH_2\text{-}CH_2\text{-}O)_n- \qquad (2)$$

dans laquelle n représente une valeur numérique de 13 à 46,
et
(ii) un polycarbonate diol représenté par la formule générale (3) :

$$HO\text{-}(R\text{-}O\text{-}CO\text{-}O)_p\text{-}R\text{-}OH \qquad (3)$$

dans laquelle les R peuvent être identiques ou différents les uns des autres et représentent un groupe hydrocarboné aliphatique bivalent comportant de 3 à 9 atomes de carbone et comportant facultativement une chaîne ramifiée, ou un groupe hydrocarboné alicyclique bivalent comportant de 6 à 8 atomes de carbone, et p représente une valeur numérique de 2 à 50 ;
dans laquelle le rapport massique de la quantité totale de la structure de polycarbonate représentée par la formule générale (1) et de la structure de polycarbonate représentée par $-(R\text{-}O\text{-}CO\text{-}O)_p-$ dans la formule générale (3) à la structure de polyoxyéthylène représentée par la formule générale (2) (structure de polycarbonate/structure de polyoxyéthylène), mesuré selon le procédé divulgué dans la description, est de 50/50 à 95/5 et dans laquelle R dans la formule générale (3) a la même signification que R dans la formule générale (1), et p dans la formule générale (3) a la même signification que m dans la formule générale (1).

**2.** Composition aqueuse selon la revendication 1, dans laquelle R dans le copolymère séquencé de polycarbonate/polyoxyéthylène dans la formule (1) représente un groupe pentylène ou un groupe hexylène.

**3.** Composition aqueuse selon la revendication 1 ou 2, dans laquelle, dans le copolymère séquencé de polycarbonate/polyoxyéthylène, une proportion d'une quantité totale d'une structure, dans laquelle R dans la formule générale (1) représente un groupe pentylène ou un groupe hexylène, et d'un composant, dans lequel R dans la formule générale (3) représente un groupe pentylène ou un groupe hexylène, calculée par la formule (i) suivante, est de 50 % en mole ou plus :

Proportion (% en mole) = {(Quantité molaire de structure dans laquelle R dans la formule générale (1) représente un groupe pentylène ou un groupe hexylène) + (Quantité molaire de composant dans lequel R dans la formule générale (3) représente un groupe pentylène ou un groupe hexylène)}/{(Quantité molaire totale de structure représentée par la formule générale (1)) + (Quantité molaire totale de composant représenté par la formule générale (3))} × 100 (i).

**4.** Procédé de production de la composition aqueuse selon l'une quelconque des revendications 1 à 3, comprenant obtenir un produit de réaction de transestérification d'un polycarbonate diol représenté par la formule générale (3) suivante en tant que matière première et d'un polyéthylène glycol représenté par la formule générale (4) suivante en tant que matière première :

$$HO\text{-}(R\text{-}O\text{-}CO\text{-}O)_p\text{-}R\text{-}OH \qquad (3)$$

dans lequel les R peuvent être identiques ou différents les uns des autres et représentent un groupe hydrocarboné aliphatique bivalent comportant de 3 à 9 atomes de carbone et comportant facultativement une chaîne ramifiée, ou un groupe hydrocarboné alicyclique bivalent comportant de 6 à 8 atomes de carbone, et p représente une valeur numérique de 2 à 50 ; et

$$HO\text{-}(CH_2\text{-}CH_2\text{-}O)_q\text{-}H \qquad (4)$$

dans lequel q représente une valeur numérique de 13 à 46.

5. Procédé selon la revendication 1, 3 ou 4, dans lequel R dans le polycarbonate diol représenté par la formule générale (3) en tant que matière première représente au moins un groupe pentylène et un groupe hexylène.

6. Procédé selon la revendication 5, dans lequel une proportion d'un polycarbonate diol, dans lequel R dans le polycarbonate diol représenté par la formule générale (3) en tant que matière première représente un groupe pentylène ou un groupe hexylène, est de 50 % en mole ou plus.

7. Utilisation de la composition aqueuse selon l'une quelconque des revendications 1 à 3, en tant que composition d'encre aqueuse.

8. Utilisation de la composition aqueuse selon l'une quelconque des revendications 1 à 3, en tant que composition d'agent adhésif visqueux aqueux.

9. Utilisation d'un copolymère séquencé de polycarbonate/polyoxyéthylène, comprenant une structure de polycarbonate représentée par la formule générale (1) suivante et une structure de polyoxyéthylène représentée par la formule générale (2) suivante, dans laquelle la proportion des groupes hydroxyles dans la quantité totale des deux groupes terminaux du copolymère, mesurée selon le procédé divulgué dans la description, est de 90 % en mole ou plus :

$$-(R\text{-}O\text{-}CO\text{-}O)_m- \qquad (1)$$

dans laquelle les R peuvent être identiques ou différents les uns des autres et représentent un groupe hydrocarboné aliphatique bivalent comportant de 3 à 9 atomes de carbone et comportant facultativement une chaîne ramifiée, ou un groupe hydrocarboné alicyclique bivalent comportant de 6 à 8 atomes de carbone, et m représente une valeur numérique de 2 à 50 ; et

$$-(CH_2\text{-}CH_2\text{-}O)_n- \qquad (2)$$

dans laquelle n représente une valeur numérique de 13 à 46,
dans une composition aqueuse pour un revêtement selon l'une quelconque des revendications 1 à 3.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 63064553 A
- JP 2005232447 A
- JP 3252420 A
- JP 2002179787 A
- JP H02219821 A
- US 5260129 A
- WO 2012069523 A1
- JP 2006124485 B